# EUROPEAN PATENT APPLICATION

(11) **EP 4 481 221 A1**
(43) Date of publication of application: **25.12.2024**
(21) Application number: 23180695.1
(22) Date of filing: 21.06.2023
(51) Int. Cl.: F16D 25/0638

(54) **HYBRID ENDLESS DIRECT DRIVE**

(71) Applicant: Alpraaz AB, 262 74 Ängelholm (SE)
(72) Inventor: VON KOENIGSEGG, Christian, 266 54 Vejbystrand (SE)
(74) Representative: Brann AB

(57) **Abstract**

A clutch (18) is proposed arranged to selectively connect a first shaft (62) to a belt or roller chain (118). The clutch (18) has a first rotational axis (26) and comprises: a first clutch hub (30) and a first roller (34) centered on the first rotational axis (26), a first clutch mechanism (20), and a first actuator (42). The first clutch hub (30) is arranged to be mounted on the first shaft (62), the first roller (34) is rotationally supported relative to the first clutch hub (30), and the first roller (34) forms a first interface (38) arranged to cooperate with the belt or a roller chain (118). The first clutch mechanism (20) operationally connects the first clutch hub (30) and the first roller (34), and the first clutch mechanism (20) is positioned between the first rotational axis (26) and the first roller (34). The first clutch mechanism (20) has a disengaged state in which the first roller (34) can rotate relative to the first clutch hub (30) and an engaged state in which the first roller (34) cannot rotate relative to the first clutch hub (30), and the first actuator (42) is arranged to set the first clutch mechanism (20) in the disengaged state or the engaged state. A belt drive or chain drive (14), a powertrain (12), and an outboard motor (200) comprising the clutch (18) are also proposed.

## Description

### TECHNICAL FIELD

The proposed technology generally relates to powertrains for watercraft, and in particular to hybrid power trains for watercraft. It further relates to belt drives or chain drives for, and to clutches incorporated in such. It further relates to hydrojets driven by belts or roller chains. A particular application of the proposed technology is in outboard motors for boats.

### BACKGROUND

An outboard motor is a common self-contained propulsion system for boats. It typically has an engine, gearbox, and propeller or hydrojet and is arranged to be affixed to the outside of the transom of the boat. In addition to providing propulsion, outboard motors are arranged to pivot relative to the boat and provide steering control. There are pushing-type and tractor-type outboard motors. The former generally rely on a propeller facing aft relative to the boat and the latter generally rely on a propeller that faces forward relative to the boat. There are also outboard motors that rely on hydrojets for propulsion.

Belts and chains are commonly used for power transmission between shafts. In belt drives, the belt forms a loop and is typically connected to the shafts by rollers in the form of pulleys. In chain drives, the chain forms a loop and is typically connected to the shafts by rollers in the form of sprockets. It is known to use belt drives and chain drives in power trains for outboard motors. Typically, a gearbox is included in the powertrain that allows for idling, forward drive, and aft drive. The gearbox is typically located in the midsection of the outboard motor.

It is an object of the proposed technology to provide a powertrain having a belt drive or chain drive with a simplified architecture, for example without a gearbox. It is a further object to provide a simplified belt drive or chain drive, and a belt drive and chain drive adding little to the aft extension of the outboard motor. It is a further object to provide a hybrid outboard motor having an internal combustion engine and an electric motor as prime movers. It is further an object to provide a belt-driven hydrojet.

### SUMMARY

In a first aspect of the proposed technology, a clutch, or clutch system, is arranged to selectively connect and disconnect a first shaft to a belt or roller chain, wherein the clutch has a first rotational axis and comprises: a first clutch hub centered on the first rotational axis, a first roller, or first pulley, centered on the first rotational axis, a first clutch mechanism, and a first actuator. The first clutch hub is arranged to, or configured to, be mounted on, or fixed to, the first shaft. The first roller is rotationally supported, or is arranged to rotate, relative to the first clutch hub, and the first roller forms, or comprises, a first interface arranged to cooperate with, or connect to, the belt or the roller chain. The first clutch mechanism operationally connects the first clutch hub and the first roller, and the first clutch mechanism is positioned between the first rotational axis, or the first clutch hub, and the first roller. The first clutch mechanism has a disengaged state in which the first roller can rotate relative to, or is rotationally unlocked from, the first clutch hub and an engaged state in which the first roller cannot rotate relative to, or is rotationally locked to, the first clutch hub. The first actuator is arranged to transition the first clutch mechanism between the disengaged state and the engaged state, and/or to set the first clutch mechanism in the disengaged state or the engaged state. The first roller may be positioned radially outside of the first clutch hub relative to the first rotational axis.

It is specified that the first clutch mechanism is positioned between the first rotational axis, or the first clutch hub, and the first roller. Worded differently, the first clutch mechanism is located within the first roller, or positioned radially between the first roller and the first rotational axis and axially between a first end and an opposite second of the first roller along the first rotational axis. This means that a radial, or transverse, line intersecting the first rotational axis passes through the first clutch mechanism and the first roller.

It is understood that the belt or a roller chain may part of a drivetrain or powertrain. The first roller forming a first interface arranged to cooperate with a belt or a roller chain and the first clutch mechanism being positioned between the first clutch hub and the first roller jointly contributes to a powertrain with a shorter axial length, and in extension to a reduced aft extension of an outboard motor having an internal combustion engine with a crank shaft centered on the first rotational axis and connected to the first shaft. The belt and the roller chain may respectively form part of a belt drive and a chain drive. It is further understood that the belt and the roller chain are endless and form a loop. The first clutch mechanism may be positioned between the first interface and the first rotational axis, or the first clutch hub. This further contributed to a drivetrain with a shorter axial length.

It is understood that the first rotational axis defines the intended rotation of the first clutch and the first roller. The first roller may define the first rotational axis. If the first clutch is mounted on a first shaft, it is understood that the first shaft shares the first rotational axis.

The first clutch hub and the first roller may be annular and may be centered on the first rotational axis, or on the first shaft.

Here, that an element is rotationally fixed to another element means that the elements cannot rotate relative to one another around the rotational axis. That an element is axially fixed to another element means that the elements cannot shift in position relative to one another along the rotational axis. If an element is fixed to another element, this means that the elements cannot rotate or shift relative to one another. That an element is rotationally supported or rotationally unlocked relative to another elements means that the elements can rotate relative to one another. That an element is rotationally locked to another element means that the elements cannot rotate relative to one another.

In a second aspect of proposed technology, a clutch and shaft assembly comprises: a clutch according to the first aspect of the proposed technology, and a first shaft, wherein the first shaft is rotationally fixed to the first clutch hub. The first shaft may be axially fixed to, or fixed to, the first shaft. It is understood that the first shaft is centered on the first rotational axis.

In a third aspect of proposed technology, a belt drive or chain drive comprises: a clutch and shaft assembly according to the second aspect of the proposed technology, a belt or roller chain, and a second roller having, or defining, a second rotational axis, wherein the belt or roller chain interconnects the first roller of the clutch and the second roller.

It is understood that the first rotational axis and the second rotational axis may be parallel. It is further understood that the second roller is centered on the second rotational axis. It is further understood that the second rotational axis of the first clutch hub defines the intended rotation of the second roller. The belt drive or chain drive may be an outboard drive, which means that it is positioned outside the hull of a watercraft. It is understood that the first roller or the clutch, the second roller, and the belt or roller chain are arranged to transfer power, or torque, form the first roller to the second roller. It is further understood that the belt or roller chain may extend transversely to the first rotational axis, or that it may form a loop transverse to the first rotational axis.

In a fourth aspect of proposed technology, a powertrain, or drive unit, comprises: the belt drive or chain drive according to the third aspect of the proposed technology, and a first prime mover, wherein the first shaft is connected to the first prime mover.

In a fifth aspect of proposed technology, an outboard motor comprises: a powertrain according to the fourth aspect of the proposed technology.

In a sixth aspect of proposed technology, a hydrojet, or pump jet for a watercraft is arranged to be driven by a belt or roller chain.

In a seventh aspect of the proposed technology, a watercraft, such as a boat, comprises the abovementioned powertrain according to the fourth aspect of the proposed technology, the outboard motor according to the fifth aspect of the proposed technology, or the hydrojet according to the sixth aspect of the proposed technology.

In an eighth aspect of the proposed technology, a housing, or casing, for a belt drive or chain drive having a first roller or a clutch and shaft assembly according to the second aspect of the proposed technology, a second roller, and a belt or roller chain that interconnects the first roller of the clutch and the second roller, wherein the housing is arranged to enclose, or accommodate, the first roller or clutch, the belt or roller chain, and the second roller. The housing may be arranged to contain, or hold, a fluid, such as a lubricant-coolant. It is understood that the first roller or the clutch, the second roller, and the belt or roller chain are arranged to transfer power, or torque, form the first roller to the second roller.

In a ninth aspect of the proposed technology, an impeller has, or comprises, an annular impeller housing, or impeller shroud, wherein the impeller housing forms, or comprises, an interface arranged to cooperate with, or connect to, a belt or roller chain. It is understood that the impeller may be for a hydrojet application.

In the proposed clutch, the first clutch hub may be arranged to be fixed to, or to rotationally fixed to, the first shaft, for example by way of a spline joint. In the proposed clutch and shaft assembly, the first clutch hub may be fixed to, or rotationally fixed to, the first shaft, for example by way of a spline joint.

The first actuator may be a linear actuator arranged to engage, or actuate, the first clutch mechanism, or to perform a motion along, or parallel with, the first rotational axis. This contributes to smaller outer diameter of the first roller.

The clutch may be arranged to specifically connect the first shaft to a belt. The first roller may be, or constitute, a pulley. The belt may be a flat belt and the first interface may form, or outline, a cylindrical surface centered on the first rotational axis and arranged cooperate with the belt.

Alternatively, the belt may be a groove belt forming, or comprising, a longitudinal groove, and the first interface may additionally or alternatively form, or comprise, an annular ridge, or annular flange, centered on the first rotational axis and arranged to mate with, or cooperate with, the groove. It is understood that the groove is on the side of the belt facing the first interface. It is understood that a flat belt or a V belt can be a groove belt.

Alternatively, the belt may be a V belt and the first interface may form, or comprise, an annular grove centered on the first rotational axis and arranged to mate with, or cooperate with, the V belt.

The belt may be a toothed belt, or synchronous belt, forming a plurality of belt teeth, and the first interface may form, or comprise, a plurality of roller teeth, arranged to mate with, or cooperate with, the belt teeth. It is understood that the belt teeth are on the side of the belt facing the first interface.

The clutch may be arranged to specifically connect the first shaft to a roller chain. The first interface may form, or comprise a sprocket centered on the first rotational axis and arranged to mate with, or cooperate with, the roller chain.

The clutch may further comprise a first bearing and a second bearing arranged to carry a load, or radial load, on the first roller relative to the first shaft, or relative to the first rotational axis. The first clutch mechanism and/or the first interface may be positioned axially between the first bearing and the second bearing relative to the first rotational axis. For example, the first bearing and the second bearing may be rotary bearings centered on the first rotational axis, such as a rolling-element bearing. With the specified positioning of the first bearings and the second bearing, deformation of the first roller is reduced at a radial load. It specified that the first clutch hub is arranged to be mounted on a first shaft. This means first bearing and a second bearing are also arranged to carry a radial load on the first roller also relative to the first clutch hub. For example, both the first bearing and the second bearing may be arranged to interconnect the first roller and the first shaft, or the first bearing may be arranged to interconnect the first roller and the first shaft, and the second bearing may interconnect the first roller and the first clutch hub, or both the first bearing and the second bearing may interconnect the first roller and the first clutch hub. It is understood that the radial load may be from the belt or roller chain and that it is relative to the first rotational axis.

The first roller may have, or form, a first radial wall. The first actuator may be arranged to bias the first clutch mechanism against the first radial wall in the engaged state, or at a transition to the engaged state. The first radial wall may extend radially inward from the first interface relative to the first rotational axis. Worded differently, the first actuator may be arranged to generate an axial load on the first roller in the engaged state of the first clutch mechanism, or at a transition to the engaged state of the first clutch mechanism. The first roller may be arranged to shift along the first rotational axis at a transition to the engaged state of the first clutch mechanism. It is understood that it may also be arranged to shift in the opposite direction at a transition to the disengaged state of the first clutch mechanism. For example, the abovementioned first bearing and second bearing may be fixed to the first clutch hub or the first shaft and slidably connected to the first roller, or vice versa.

The first roller may have, or form, a second radial wall, wherein the second radial wall is arranged to bias against the first clutch hub, or the first shaft, in the engaged state of the first clutch mechanism, or at a transition to the engaged state of the first clutch mechanism. The second radial wall may extend radially inward from the first interface relative to first rotational axis. The first actuator and/or the first clutch mechanism may be positioned axially between the first radial wall and the second radial wall.

The clutch may comprise a third bearing arranged to carry an axial load on the first roller relative to the first shaft or the first rotational axis, for example generated by the first actuator. For example, the third bearing may be a rotary bearing, such as a rolling-element bearing, centered on the first rotational axis. The third rotary bearing may interconnect the second radial wall and the first clutch hub or the first shaft.

The first clutch mechanism may be, or comprise, a first clutch pack and the first roller may be, or form, a clutch basket. It is understood that the first clutch pack operationally connects the first clutch hub and the first roller. The first clutch pack may be annular and centered on the first rotational axis. The first clutch pack may comprise a plurality of inner plates, or first plates, connected to, or rotationally fixed to, the first clutch hub and a plurality of outer plates, or second plates, connected to, or rotationally fixed to, the clutch basket. For example, the first clutch hub may form inner splines extending along the first rotational axis and facing the first clutch pack, and each of the inner plates may form cutouts, or female splines, facing the first clutch hub and cooperating with, or matching, the inner splines. Similarly, the clutch basket may form outer splines extending along the first rotational axis and facing the first clutch pack, and each of the outer plates may form cutouts, or female splines, facing the clutch basket and cooperating with, or matching, the outer splines. Worded differently, the first clutch hub and the inner plates may form an inner spline joint and the clutch basket and the outer plates may form an outer spline joint, wherein the inner spline joint is arranged to rotationally lock the inner plates to the first clutch hub and the outer spline joint is arranged to rotationally lock the outer plates to the clutch basket. The inner spline joint and the outer spline joint may be arranged to allow the inner plates respective the outer plates to shift in position along the first rotational axis. Worded differently, the inner plates may be arranged to shift in position along the first rotational axis relative to the first clutch hub and the outer plates may be arranged to shift in position along the first rotational axis relative to the first clutch hub. This means that the first clutch hub constitutes an inner plate carrier, and the clutch basket constitutes an outer plate carrier.

The inner plates and the outer plates may be overlapping, paired sequentially, and centered on the first rotational axis. Worded differently, the inner plates and the outer plates are arranged alternatingly in a stack. The first clutch pack may be coaxial with the first clutch hub, and the clutch basket may be coaxial with the first clutch pack.

In the disengaged state, the inner plates and the outer plates are spaced apart along the rotation axis. This way, the clutch basket is rotationally unlocked from the first clutch hub. In the engaged state, the inner plates and the outer plates are pressed together along the first rotational axis. This way, the clutch basket is rotationally locked to the first clutch hub. The inner plates and the outer plates may be spring biased to be in the disengaged state, for example by a set of springs. It is understood that in the disengaged state, there is no mechanical friction between the inner plates and the outer plates and in the engaged state there is a static friction between the inner plates and the outer plates. The first clutch mechanism may further have a slipping state in which there is a kinetic friction between the inner plates and the outer plates. The slipping state may be reached in a transition between the disengaged state and the engaged state.

The first actuator may be arranged to compress the first clutch pack along the first rotational axis, or to engage the first clutch pack to transition the first clutch mechanism from the disengaged state to the engaged state. The first clutch hub may form, or comprise, a first axial support arranged to prevent the first clutch pack to move away from the first actuator, and the first actuator may be arranged to bias the first clutch pack against the first axial support in the engaged state, or at a transition to the engaged state, such as in a slipping state. For example, the first axial support may be an annular wall that is centered on the first rotational axis and extends radially outwards relative to the first rotational axis. Alternatively, the first actuator may be arranged to bias the first clutch mechanism against the abovementioned first radial wall in the engaged state, or at a transition to the engaged state.

The first clutch pack described above contributes to a smaller radius and greater axial length of the clutch mechanism and the first roller. The smaller radius contributes to increase the mechanical advantage or gear ratio when the clutch is connected to the input in a belt drive or chain drive. The greater axial length allows for a wider belt to be used in a belt drive.

The features described here essentially corresponds those of a multiple-plate clutch.

The first clutch hub may further form, or comprise, a first conduit arranged to conduct, or lead, a lubricant-coolant fluid from the first shaft to the first clutch pack. The first conduit may have an inlet at the first shaft. The first shaft may have a first supply conduit arranged to conduct, or lead, the lubricant-coolant fluid to the clutch. The inlet may be arranged to receive the lubricant-coolant fluid from the first shaft, or from the first supply conduit. The first conduit may have an outlet at the first clutch pack. The outlet may be arranged to release the lubricant-coolant fluid to the first clutch pack, or between the inner and outer plates of the first clutch pack. The outlet may be located between the first clutch pack and the first rotational axis. Worded differently, the first clutch pack may be positioned between the outlet and the clutch basket. With the configuration specified here, the first clutch mechanism essentially corresponds to a multi-plate wet clutch.

The first roller, or clutch basket, may form, or comprise, an aperture arranged to allow a coolant-lubricant fluid within the clutch basket to escape, or be released from, the first roller, or clutch basket. The escape may be radially outwards. The aperture may be located at the first clutch pack. Alternatively or additionally, the aperture may be located at the first interface. Within the clutch basket, the coolant-lubricant fluid may be released from the first clutch pack, or released from between the inner and outer plates of the first clutch pack. The aperture allows for the first interface and the belt or roller chain to be lubricated. In extension, the abovementioned first conduit allows for a lubrication via the shaft.

The first actuator may be a single actuator. This means that there is only one actuator mechanism operating the first clutch pack. The fact that a single actuator can provide this function further contributes to a more compact construction of the clutch.

As mentioned above, the first actuator may be arranged to compress the first clutch pack along the first rotational axis. The first actuator may be a hydraulic actuator. The first actuator may comprise an annular recess, or annular cylinder, formed by the first clutch hub and centered on the first rotational axis, and a ring-shaped piston positioned, or seated, in the recess and arranged to move along the first rotational axis and bias the first clutch pack. It is understood that the annular recess faces the first clutch pack. The first clutch hub may further form, or comprise, a second conduit arranged to conduct, or lead, a hydraulic fluid from the first shaft to the first actuator, or to the annular recess. Worded differently, the second conduit is arranged to establish a fluid coupling between the first shaft and the first actuator, or the annular recess. The second conduit may have an inlet at the first shaft. The first shaft may have a second supply conduit arranged to conduct, or lead, the hydraulic fluid to the clutch. The inlet may be arranged to receive the hydraulic fluid from the first shaft, or from the second supply conduit. The second conduit may have an outlet to the annular recess. The outlet may be arranged release the hydraulic fluid in the annular recess. This way, the first actuator can be operated by supplying the hydraulic fluid via of the first shaft.

Alternatively to the first clutch mechanism being a first clutch pack, the first clutch mechanism may be, or comprise, a first dog clutch. The first dog clutch may be centered on the first rotational axis. The first dog clutch may comprise a first member connected to, or rotationally fixed to, the first clutch hub and a second member connected to, or rotationally fixed to, the first roller. The second member may also be axially fixed to the first roller. For example, the second member may be fixed to the abovementioned first radial wall.

In the disengaged state, the first member and the second member of the first dog clutch are rotationally unlocked, for example by being spaced apart along the rotation axis. This means that they can rotate freely relative to one another. In the engaged state, the first member and the second member of the first dog clutch are rotationally interlocked, for example by being pressed together. This means that they cannot rotate freely relative to one another. For example, the first member and the second member may form teeth that are interlocked in the engaged state.

The first actuator may be an electromechanical actuator. The first actuator may be arranged to shift the first member along the first rotational axis to transition the first clutch mechanism from the disengaged state to the engaged state. Worded differently, the first actuator may be arranged to shift the first member along the first rotational axis, or to actuate the first member to interlock with the second member. The first clutch hub may form, or comprise, a first axial support arranged to prevent the first roller, or the second member, to shift in position away from the first actuator, and the first actuator may bias the first roller, or the second member, against the first axial support in the engaged state. It is understood that this may be an alternative to the abovementioned second radial wall.

In the first aspect of the proposed technology, the clutch may further be arranged to connect a second shaft to the belt or roller chain, wherein the first roller is arranged to, or configured to, be mounted on, or fixed to, the second shaft. This means that it is arranged to be permanently and rotationally fixed to the second shaft. With these features, the clutch essentially constitutes a single clutch that can selectively connect and disconnect the first shaft to the first roller. In the second aspect of the proposed technology, the clutch and shaft assembly may further comprise: a second shaft, wherein the first roller is mounted on, or fixed to, or rotationally fixed to, the second shaft. It is understood that the second shaft is centered on the rotational axis.

The first shaft may have a forward end at the clutch, or at the first clutch hub, and the second shaft may have a forward end at the clutch, or at the first roller, which faces the forward end of the first shaft. Worded differently, the first shaft and the second shaft may be positioned in series along the first rotational axis.

Alternatively, the first shaft may have a forward end at the clutch, or the first clutch hub, and the second shaft may have a forward end at the clutch, or at the first roller, which faces in the same direction as the forward end of the first shaft. Worded differently, the first shaft may be hollow and the second shaft may extend through the first shaft, or the second shaft may be hollow and the first shaft may extend through the second shaft.

Alternatively to the first roller being arranged to be mounted on a second shaft, the clutch may further be arranged to selectively connect and disconnect a second shaft to a belt or roller chain, wherein the clutch further comprises: a second clutch hub, a second clutch mechanism, and a second actuator. The second clutch hub is arranged to, or configured to, be mounted on, or fixed to, the second shaft. The first roller is rotationally supported, or is arranged to rotate, relative to the second clutch hub. The second clutch mechanism operationally connects the second clutch hub and the first roller, and the second clutch mechanism is positioned between the first rotational axis, or the second clutch hub, and the first roller. The second clutch mechanism has a disengaged state in which the first roller can rotate relative to, or is rotationally unlocked from, the second clutch hub and an engaged state in which the first roller cannot rotate relative to, or is rotationally locked to, the second clutch hub. The second actuator is arranged to transition the second clutch mechanism between the disengaged state and the engaged state, or to set the second clutch mechanism in the disengaged state or the engaged state. The first roller may be positioned radially outside of the second clutch hub relative to the first rotational axis. With these features, the clutch essentially constitutes a dual clutch that can selectively connect and disconnect the first shaft and the second shaft to the first roller.

It is specified that the second clutch mechanism is positioned between the first rotational axis, or the second clutch hub, and the first roller. Worded differently, the second clutch mechanism is located within the first roller, or positioned between the first roller and the first rotational axis and axially between a first end and an opposite second of the first roller along the first rotational axis. This means that a radial, or transverse, line intersecting the first rotational axis passes through the second clutch mechanism and the first roller. The second clutch mechanism may be positioned between the first interface and the first rotational axis, or the first clutch hub. The feature discussed here contributes to a drivetrain with a shorter axial length, and in extension to a reduced aft extension of an outboard motor having an internal combustion engine with a crank shaft centered on the first rotational axis and connected to the first shaft.

In the above two alternatives of the first aspect of the proposed technology, it is specified that the second clutch hub is arranged to be mounted on the second shaft. In the second aspect of the proposed technology, the clutch and shaft assembly may further comprise: a second shaft, wherein the second clutch hub is fixed to, or rotationally fixed to, the second shaft.

It is understood that the second clutch hub may be centered on the first rotational axis. It is further understood that the second shaft may be centered on, or aligned with, the first shaft. It also is understood that the second clutch hub may be annular and that it may be centered on the first rotational axis, or on the second shaft.

The first clutch hub and the second clutch hub may be arranged in series along the first rotational axis. The first clutch hub and the second clutch hub may be spaced apart, or non-overlapping, along the first rotational axis. The first clutch mechanism and the second clutch mechanism may be spaced apart along the first rotational axis. The first actuator and the second actuator may be spaced apart along the first rotational axis. The features described here allows for the second clutch hub, the second clutch mechanism, and the second actuator to be added without adding to outer diameter of the clutch.

The second actuator may be a linear actuator arranged to engage the second clutch mechanism, or to perform a motion along, or parallel with, the first rotational axis. This contributes to smaller outer diameter of the first roller.

The first actuator may be arranged to transition the first clutch mechanism between the disengaged state and the engaged state independently from the second actuator. Similarly, the second actuator may be arranged to transition the second clutch mechanism between the disengaged state and the engaged state independently from the first actuator. The first actuator may be arranged to bias the first clutch mechanism towards the second actuator at a transition from the disengaged state to the engaged state of the first clutch mechanism. Alternatively, the first actuator may be arranged to bias the first clutch mechanism away from the second actuator at a transition from the disengaged state to the engaged state of the first clutch mechanism. Similarly, the second actuator may be arranged to bias the second clutch mechanism towards the first actuator at a transition from the disengaged state to the engaged state of the second clutch mechanism. Alternatively, the second actuator may be arranged to bias the second clutch mechanism away from the first actuator at a transition from the disengaged state to the engaged state of the second clutch mechanism.

It is specified above that the first roller may have a first radial wall. The second actuator may be arranged to bias the second clutch mechanism against the first radial wall in the engaged state of the second clutch mechanism, or at a transition to the engaged state of the second clutch mechanism. Worded differently, the second actuator may be arranged to generate an axial load on the first roller in the engaged state of the second clutch mechanism, or at a transition to the engaged state of the second clutch mechanism. The first roller may be arranged to shift along the first rotational axis at a transition to the engaged state of the second clutch mechanism. It is understood that it may also be arranged to shift in the opposite direction at a transition to the disengaged state of the second clutch mechanism. The configuration described here contributes to a smaller axial length if the first actuator and the second actuator are arranged to respectively bias the first clutch mechanism and the second clutch mechanism towards the other actuator.

Alternatively, the first roller may have, or form, a third radial wall. The second actuator may be arranged to bias the second clutch mechanism against the third radial wall in the engaged state, or at a transition to the engaged state. The third radial wall may extend radially inward from the first interface relative to the first rotational axis. Worded differently, the second actuator may be arranged to generate an axial load on the first roller in the engaged state of the second clutch mechanism, or at a transition to the engaged state of the second clutch mechanism. The first roller may be arranged to shift along the first rotational axis at a transition to the engaged state of the second clutch mechanism. It is understood that it may also be arranged to shift in the opposite direction at a transition to the disengaged state of the second clutch mechanism.

The first roller may have, or form, a fourth radial wall, wherein the fourth radial wall is arranged to bias against the second clutch hub, or the second shaft, in the engaged state of the second clutch mechanism, or at a transition to the engaged state of the second clutch mechanism. The fourth radial wall may extend radially inward relative to the first interface and the first rotational axis. The second actuator and/or the second clutch mechanism may be positioned axially between the first radial wall and the fourth radial wall, or between the third radial wall and the fourth radial wall.

The clutch may comprise a fourth bearing arranged to carry an axial load on the first roller relative to the second shaft, for example generated by the second actuator. For example, the fourth bearing may be a rotary bearing, such as a rolling-element bearing, centered on the first rotational axis. The fourth rotary bearing may interconnect the fourth radial wall and the second clutch hub or the second shaft.

In the proposed clutch, the second clutch hub may be arranged to be fixed to, or rotationally fixed to, the second shaft, for example by way of spline joint. In the proposed clutch and shaft assembly, the second clutch hub may be fixed to, or rotationally fixed to, the second shaft, for example by way of spline joint.

The first shaft may have a forward end at the clutch, or at the first clutch hub, and the second shaft may have a forward end at the clutch, or at the second clutch hub, which faces the forward end of the first shaft. Worded differently, the first shaft and the second shaft may be positioned in series along the first rotational axis. Alternatively, The first shaft may have a forward end at the clutch, or at the first clutch hub, and the second shaft may have a forward end at the clutch, or at the second clutch hub, which faces in the same direction as the forward end of the first shaft. Worded differently, the first shaft may be hollow and the second shaft may extend through the first shaft, or the second shaft may be hollow and the first shaft may extend through the second shaft..

It is specified above that the clutch may further comprise a first bearing and a second bearing arranged to carry a load on the first roller relative to the first shaft, or relative to the first rotational axis. The first and second bearings may also be arranged to carry the load relative to the second shaft. The second clutch mechanism may be positioned axially between the first bearing and the second bearing relative to the first rotational axis. The first bearing may connect the first roller and the first clutch hub. Worded differently, the first bearing may be a rolling-element bearing having a race fixed to the first roller and another race fixed to the first clutch hub. Similarly, the second bearing may connect the first roller and the second clutch hub. Worded differently, the second bearing may be a rolling-element bearing having a race fixed to the first roller and another race fixed to the second clutch hub.

The second clutch mechanism may be, or comprise, a second clutch pack and the first roller may be, or form, a clutch basket. It is understood that the second clutch pack operationally connects the second clutch hub and the first roller. The second clutch pack may be annular and centered on the first rotational axis. The second clutch pack may comprise a plurality of inner plates connected to, or rotationally fixed to, the second clutch hub and a plurality of outer plates connected to, or rotationally fixed to, the clutch basket. The second clutch hub, the second clutch pack, and the clutch basket may be arranged as the first clutch hub, the first clutch pack, and the clutch basket described above. For example, the second clutch pack may comprise a plurality of inner plates and a plurality of outer plates, and the second clutch hub and the inner plates may form an inner spline joint and the clutch basket and the outer plates may form an outer spline joint, wherein the inner spline joint is arranged to rotationally lock the inner plates to the second clutch hub and the outer spline joint is arranged to rotationally lock the outer plates to the clutch basket. The clutch essentially corresponds to a dual multiple-plate clutch if the first clutch mechanism has a first clutch pack and the second clutch mechanism has a second clutch pack as described here.

The second actuator may be arranged to compress the second clutch pack along the first rotational axis, or to engage the second clutch pack to transition the second clutch mechanism from the disengaged state to the engaged state. The second clutch hub may form, or comprise, a second axial support arranged to prevent the second clutch pack to move away from the second actuator, and the second actuator may bias the first clutch pack against the second axial support in the engaged state. For example, the second axial support may be an annular wall that is centered on the first rotational axis and extends radially outwards relative to the first rotational axis.

The second clutch pack described above contributes to a dual clutch with to a smaller radius and greater axial length. The features of the second clutch mechanism described here essentially corresponds those of a multiple-plate clutch.

The second clutch hub may further form, or comprise, a third conduit arranged to conduct, or lead, a lubricant-coolant fluid from the second shaft to the second clutch pack. The third conduit may have an inlet at the second shaft. The second shaft may have a third supply conduit arranged to conduct, or lead, the lubricant-coolant fluid to the clutch. The inlet may be arranged to receive the lubricant-coolant fluid from the second shaft, or from the third supply conduit. The third conduit may have an outlet at the second clutch pack. The outlet may be arranged to release the lubricant-coolant fluid to the second clutch pack, or between the inner and outer plates of the second clutch pack.

The outlet may be located between the first clutch pack and the first rotational axis. Worded differently, the first clutch pack may be positioned between the outlet and the clutch basket.

As described above, the clutch basket may form an aperture arranged to allow a coolant-lubricant fluid within the clutch basket to escape the clutch basket. The coolant-lubricant fluid may also be released from the second clutch pack, or released from between the inner and outer plates of the second clutch pack, which may escape via the aperture.

The second actuator may be a single actuator. This means that there is only one actuator operating the clutch pack. As mentioned above, the second actuator may be arranged to compress the second clutch pack along the first rotational axis. The second actuator may be a hydraulic actuator. The second actuator may comprise an annular recess formed by the second clutch hub and centered on the first rotational axis, and a ring-shaped piston positioned, or seated, in the recess and arranged to move along the first rotational axis and bias the second clutch pack. It is understood that the annular recess faces the second clutch pack.

The clutch hub may further form, or comprise, a fourth conduit arranged to conduct, or lead, a hydraulic fluid from the second shaft to the second actuator, or to the annular recess of the second actuator. Worded differently, the fourth conduit is arranged to establish a fluid coupling between the second shaft and the second actuator, or the annular recess of the second actuator. The fourth conduit may have an inlet at the second shaft. The second shaft may have a fourth supply conduit arranged to conduct, or lead, the hydraulic fluid to the clutch. The inlet may be arranged to receive the hydraulic fluid from the second shaft, or from the fourth supply conduit. The fourth conduit may have an outlet to the annular recess of the second actuator. The outlet may be arranged to release the hydraulic fluid in the annular recess of the second actuator. This allows the second actuator to be operated by way of the second shaft and independently from the first actuator.

Alternatively to the second clutch mechanism being a second clutch pack, the first clutch mechanism may be, or comprise, a second dog clutch. The second dog clutch may be centered on the first rotational axis. The second dog clutch may comprise a first member connected to, or rotationally fixed to, the second clutch hub and a second member connected to, or rotationally fixed to, first roller. The second member may also be axially fixed to the first roller.

The first member and the second member may be arranged as described in relation to the first clutch mechanism. For example, they can rotate freely relative to one another in the disengaged state and are rotationally interlocked in the engaged state. The second actuator may be an electromechanical actuator. The second actuator may be arranged to shift the second member along the first rotational axis to transition the second clutch mechanism from the disengaged state to the engaged state. Worded differently, the second actuator may be arranged to shift the first member along the first rotational axis, or to actuate the first member to interlock with the second member.

The second clutch hub may form, or comprise, a second axial support arranged to prevent the first roller, or the second member, to shift in position away from the second actuator, and the second actuator may bias the first roller, or the second member, against the second axial support in the engaged state. For example, the second axial support may be an annular wall that is centered on the first rotational axis and extends radially outwards.

It is understood that the first clutch mechanism may comprise the first clutch pack and that the second clutch mechanism may simultaneously comprise the second clutch pack. This allows for a smooth transition between different modes of operation in a parallel hybrid powertrain. It is further understood that the first clutch mechanism may comprise the first clutch pack and that the second clutch mechanism may simultaneously comprise the second dog clutch. This may be advantageous in a parallel hybrid allows if the combustion engine is connected to the first shaft and the electric motor is connected to the second shaft, since the electric motor is generally more responsive in changing the rotational speed and can better match the rotational speed of the first roller. It is further understood that the first clutch mechanism may comprise the first dog clutch and that the second clutch mechanism may simultaneously comprise the second clutch pack. With the above connections of the combustion engine and the electric motor, this may be advantageous if the parallel hybrid drive is intended to primarily have the combustion engine engaged. It is further understood that the first clutch mechanism may comprise the first dog clutch and that the second clutch mechanism may simultaneously comprise the second dog clutch. This may be advantageous in application in which the first roller is not rotationally locked to the surroundings, such as in a powertrain connected to a propeller in a marine application.

It is specified above that the clutch may further be arranged to connect a second shaft to the belt or roller chain. In the first aspect of the proposed technology, the clutch may further comprise: a third clutch mechanism, and a third actuator, wherein the third clutch mechanism operationally connects the first shaft and the second shaft. The third clutch mechanism has a disengaged state in which the second shaft can rotate relative to, or is rotationally unlocked from, the first shaft and an engaged state in which the second shaft cannot rotate relative to, or is rotationally locked to, the first shaft. The third actuator is arranged to transition the third clutch mechanism between the disengaged state and the engaged state, or to set the first clutch mechanism in the disengaged state or the engaged state.

The third clutch mechanism may be positioned between the first rotational axis and the first roller. Worded differently, the third clutch mechanism may be located within the first roller, or positioned radially between the first roller and the first rotational axis and axially between a first end and an opposite second of the first roller along the first rotational axis.

The third clutch mechanism is advantageous in a parallel hybrid powertrain. With both the first clutch mechanism and the second clutch mechanism disengaged and the third clutch mechanism engaged, the electric motor can be used as a starter motor for the combustion engine without torque being supplied to the belt or the roller chain. Further, the electric motor may be arranged to function as an electric generator for charging a battery, and the combustion engine can supply torque to the electric motor for charging the battery without torque being supplied to the belt or roller chain.

The third actuator may be supported by, or rotationally fixed to, the first clutch hub. The third clutch mechanism may comprise a first member connected to, or rotationally fixed to, the first clutch hub and a second member connected to, or rotationally fixed to, the second clutch hub. The second member may also be axially fixed to the second clutch hub. The second member may be formed by the second clutch hub. Alternatively, the third actuator may be supported by, or rotationally fixed to, the second clutch hub. The first member may be connected to, or rotationally fixed to, the second clutch hub and the second member may be connected to, or rotationally fixed to, the first clutch hub. Further, the second member may be axially fixed to the first clutch hub, and the second member may be formed by the first clutch hub. For example, the third clutch mechanism may be, or comprise, a third dog clutch. The third dog clutch may be centered on the first rotational axis. In these alternatives, the third actuator may be a linear actuator arranged to engage the first clutch mechanism, or to perform a motion along, or parallel with, the first rotational axis. This contributes to a smaller outer diameter of the first roller.

Alternatively to the first member being connected to the first clutch hub and the second member being connected to the second clutch hub, the third clutch mechanism may comprise a first member connected to, or rotationally fixed to, the first clutch hub and a second member connected to, or rotationally fixed to, the second shaft. The second member may also be axially fixed to the second shaft. The second member may be formed by the second shaft.

Alternatively, the third clutch mechanism may comprise a first member connected to, or rotationally fixed to, the second clutch hub and a second member connected to, or rotationally fixed to, the first shaft. The second member may also be axially fixed to the second shaft. The second member may be formed by the second shaft. In this alternative, the third actuator may be a linear or radial actuator arranged to engage the first clutch mechanism, or to perform a motion transverse to, or perpendicular to, the first rotational axis.

It is specified above that in the second aspect of the proposed technology, the clutch and shaft assembly may further comprise a second shaft. The assembly may further comprise: a third clutch mechanism, and a third actuator, wherein the third clutch mechanism operationally connects the first shaft and the second shaft. The third clutch mechanism has a disengaged state in which the second shaft can rotate relative to, or is rotationally unlocked from, the first shaft and an engaged state in which the second shaft cannot rotate relative to, or is rotationally locked to, the first shaft. The third actuator is arranged to transition the third clutch mechanism between the disengaged state and the engaged state, or to set the first clutch mechanism in the disengaged state or the engaged state.

The third clutch mechanism may be arranged as described in relation to the first aspect. Alternatively to the third clutch mechanism forming part of the clutch, the third actuator may be supported by, or rotationally fixed to, the first shaft. The third clutch mechanism may comprise a first member connected to, or rotationally fixed to, the first shaft and a second member connected to, or rotationally fixed to, the second shaft. Alternatively, the third actuator may be supported by, or rotationally fixed to, the second shaft. The third clutch mechanism may comprise a first member connected to, or rotationally fixed to, the second shaft and a second member connected to, or rotationally fixed to, the first shaft. The third actuator may be a linear actuator arranged to engage the third clutch mechanism, or to perform a motion transverse to, or perpendicular to, the first rotational axis. The third clutch mechanism may be positioned axially outside the first roller. As specified above, the second shaft may be hollow and the first shaft may extend through the second shaft. The third clutch mechanism may be positioned radially between the first shaft and the second shaft.

In the first aspect of the proposed technology, the third actuator may be a hydraulic actuator. The third actuator may comprise a cylinder formed by the first clutch hub and a piston arranged to cooperate with the cylinder. The clutch may be arranged to supply a hydraulic fluid to the third actuator via the first shaft, for example by the first clutch hub forming, or comprising, a conduit corresponding to the second conduit described above and by the first shaft having a conduit corresponding to the second supply conduit described above. Alternatively, the third actuator may comprise a cylinder formed by the second clutch hub and a piston arranged to cooperate with the cylinder. The clutch may be arranged to supply a hydraulic fluid to the third actuator via the second shaft, for example by the second clutch hub forming, or comprising, a conduit corresponding to the fourth conduit described above and by the second shaft having a conduit corresponding to the fourth supply conduit described above.

The third clutch mechanism may be biased to be in the disengaged state, or the third actuator may be biased to set the third clutch mechanism in the disengaged state when inactivated. For example, the biasing may be by a spring. This is advantageous in a parallel hybrid powertrain if the first actuator, second actuator, and third actuator are hydraulic actuators, the combustion engine is connected to the first shaft, and the electric motor and a hydraulic pump providing hydraulic pressure is connected to the second shaft, which allows for the powertrain to be operated as a fully electrical powertrain independently from the combustion engine. Alternatively, the third clutch mechanism may be biased to be in the engaged state, or the third actuator may be biased to set the third clutch mechanism in the engaged state when inactivated. For example, the biasing may be by a spring. This is advantageous in a parallel hybrid powertrain if the third actuator is a hydraulic actuator, the combustion engine and the pump providing hydraulic pressure are connected to the first shaft, and the electric motor is connected to the second shaft, since it allows it to be operated as a classical powertrain with the electric motor functioning as a starter motor.

It is specified that the third actuator may be a hydraulic actuator. Alternatively, the third actuator may be an electromechanical actuator.

It is specified above that in the third aspect of proposed technology, a belt drive or chain drive comprises: a clutch and shaft assembly according to the second aspect of the proposed technology, a belt or roller chain, and a second roller having, or defining, a second rotational axis. The belt or roller chain interconnects the first roller of the clutch and the second roller.

It is understood that the first roller, or the first interface, and the belt or roller chain are arranged to cooperate to transfer a force between the first roller and the belt or roller chain. The second roller may form, or comprise, a second interface arranged to cooperate with, or connect to, the belt or roller chain. The second interface may share the features of the first interface. Worded differently, the first interface and the second interface may be of the same type. For example, both the first roller and the second roller may be a pulleys and the first interface may form an annular grove centered on the first rotational axis and the second interface may form an annular groove centered in the second rotational axis and both groves may be arranged to mate with, or cooperate with, the same V belt; or the first interface may form a sprocket centered on the first rotational axis and the second interface may form a sprocket centered on the second rotational axis and both sprockets may be arranged to mate with, or cooperate with, the same roller chain.

It is understood that the second roller, or the second interface, and the belt or roller chain are arranged to cooperate to transfer a force between the second roller and the belt or roller chain.

The belt drive or chain drive according to the third aspect of the proposed technology may further comprise: a third shaft, wherein the second roller is fixed to, or rotationally fixed to, the third shaft. It is understood that the third shaft may be centered on the second rotational axis. It is specified above that the second rotational axis defines the intended rotation of the second roller. If the second roller is mounted on a second shaft, it is understood that the second shaft shares the second rotational axis. The second roller may be annular and may be centered on the second rotational axis, or on the third shaft. The third shaft may be a propeller shaft, for example in an outboard motor, or an impeller shaft for a hydrojet.

The belt drive or chain drive may further comprise: an additional clutch according to the first aspect of the proposed technology, wherein the third shaft is rotationally fixed to the first clutch hub of the additional clutch. It is understood that the additional clutch may comprise any of the features of the clutch specified above, with the difference that it comprises the abovementioned second roller instead of the first roller, and the and the second roller forms, or comprises, the abovementioned second interface arranged to cooperate with, or connect to, the belt or roller chain. Worded differently, the first roller of the additional clutch may constitute the abovementioned second roller. This means that the first clutch mechanism of the additional clutch is positioned between the second rotational axis, or the first clutch hub of the additional clutch, and the second roller. Additionally, the first clutch mechanism of the additional clutch may be positioned between the second interface and the second rotational axis or the first clutch hub of the additional clutch.

The second roller may be, or constitute, an impeller. The impeller may be centered on the second rotational axis. The second roller may form, or comprise, an annular impeller housing, or annular impeller shroud, for example for a hydrojet application. The second interface may be located on the impeller housing. The second roller may further form, or comprise, a plurality of vanes that are fixed to the impeller housing. The vanes may be located within, or radially inside, the impeller housing. The vanes may extend axially from the impeller housing relative to the second rotational axis. The impeller or the vanes may be arranged to generate a flow of water along the second rotational axis. The second roller may further form, or comprise, an impeller hub, and the vanes may join at, or be fixed to, the impeller hub. The impeller hub may be centered on the second rotational axis. The impeller hub may be arranged to restrict the flow through the impeller housing. The impeller housing may form an impeller section of an impeller tunnel, such as an impeller tunnel of a hydrojet. It is understood that the vanes and the impeller hub may be located in, or at least in part located in, the impeller section of the impeller tunnel.

The belt drive or chain drive may comprise: an additional a belt or roller chain, wherein the additional belt or roller chain interconnects the first roller of the clutch and the second roller. The belt or roller chain and the additional belt or roller chain may be of the same type. For example, both may be a V belt or a groove belt. It is understood that the belt or roller chain and the additional belt or roller chain are arranged to transfer torque between the first roller and the second roller. The belt or roller chain and the additional belt or roller chain may be parallel, which means that they extend in parallel planes. The belt or roller chain and the additional belt or roller chain may be spaced apart, for example along the first rotational axis and/or the second rotational axis.

The first roller may form, or comprise, an additional first interface arranged to cooperate with, or connect to, the additional belt or a roller chain. The first clutch mechanism may be positioned between the first interface and/or the additional first interface and the first rotational axis, or the first clutch hub. The second roller may have an additional second interface arranged to cooperate with, or connect to, the additional belt or a roller chain.

The additional belt or roller chain may comprise any of the features of, or be arranged as, the belt or roller chain. The additional first interface may comprise any of the features of, or be arranged as, the first interface. The additional second interface may comprise any of the features of, or be arranged as, the second interface. For example, the first roller, or the additional first interface, and the additional belt or roller chain may be arranged to cooperate to transfer a force between the first roller and the additional belt or roller chain, and the second roller, or the additional second interface, and the additional belt or roller chain may be arranged to cooperate to transfer a force between the second roller and the additional belt or roller chain. The additional belt or roller chain contributes to an improved security of the belt drive or chain drive. For example, if the belt or roller chain breaks, the additional belt or roller chain can continue to transfer power and torque between the first roller and the second roller.

It is specified above in the third aspect of the proposed technology that the belt drive or chain drive comprises: a clutch and shaft assembly according to the second aspect of the proposed technology, a belt or roller chain, and a second roller having a second rotational axis, wherein the belt or roller chain interconnects the first roller of the clutch and the second roller. The clutch and shaft assembly are defined in relation to the second aspect of the proposed technology, and the first roller is specified in the clutch of the first aspect of the proposed technology.

It is specified above that the powertrain according to the fourth aspect of proposed technology comprises: a belt drive or chain drive according to the third aspect of the proposed technology and a first prime mover, wherein the first shaft is connected to the first prime mover. The first shaft is specified in relation to the second aspects of the proposed technology. It is further specified above that the clutch and shaft assembly may further comprise: a second shaft, wherein the second roller is fixed to, or rotationally and axially fixed to, the second shaft.

Worded differently, the powertrain according to the fourth aspect of the proposed technology comprises: a first prime mover, a clutch, a first roller having, or defining, a first rotational axis, a second roller having, or defining, a second rotational axis, a belt or roller chain, wherein the clutch is arranged to selectively connect and disconnect the first prime mover to the first roller, and the belt or roller chain interconnects the first roller and the second roller. It is understood that the first rotational axis and the second rotational axis may be aligned, or parallel. It is further understood that the first roller is centered on the first rotational axis and that the second roller is centered on the second rotational axis.

The powertrain may comprise a clutch shaft connecting the clutch and the first prime mover and a first roller shaft connecting the first roller and the clutch. The first roller, the second roller, and the belt or roller chain may comprise any of the related features described above. The powertrain may further comprise a second roller shaft connected to the second roller, which may have any of the features of the third shaft described above.

Alternatively, the powertrain may comprise a first shaft and a clutch according to the first aspect of the proposed, wherein the first shaft is rotationally fixed to the first clutch hub of the clutch and connected to the first prime mover. The first roller then forms part of the clutch, and the clutch, the first roller, the second roller, and the belt or roller chain may comprise any of the related features described above. The powertrain may further comprise the third shaft described above.

The first prime mover may be a reciprocating combustion engine. It is understood that the engine has a crank shaft, and the crank shaft may be aligned with the first shaft, or centered on the first rotational axis of the clutch. The crank shaft may be rotationally fixed, or fixed, to the first shaft. This means that there is no gear shifting mechanism or clutch mechanism between the crank shaft and the first shaft.

The crank shaft may be connected directly to the first shaft. It is understood that any interconnecting shaft element forms part either of the crank shaft or the first shaft. Alternatively, the powertrain may comprise a gear train between the crank shaft and the first shaft. The gear train may be positioned between the first prime mover and the clutch. The gear train may be arranged to reduce the rotational rate of the first shaft relative to the crank shaft. The geartrain may have an input element and an output element. It is understood that the gear train reduces the rotational rate between the input element and the output element. The input element may be rotationally fixed, or fixed, to the crank shaft and the output element may be rotationally fixed, or fixed, to the first shaft. The crank shaft may be connected directly to the input element, and the output element may be connected directly to the first shaft. For example, the gear train may be a planetary gear set centered on the first rotational axis of the clutch. The planetary gear set has a sun gear, ring gear, planetary gears, and a carrier connected to the planetary gears. The ring gear is held stationary, and the crank shaft may be rotationally fixed, or fixed, to the sun gear and the first shaft may be rotationally fixed, or fixed, to the carrier. The planetary gear set is advantageous in that it has a short axial length and ads little to the length of the powertrain at the first mover.

The powertrain may further comprise a second prime mover connected to the second shaft of the clutch and shaft assembly. The second prime mover may be an electric motor. It is understood that the motor has a stator and a rotor, and the rotor may be aligned with the second shaft, or centered on the first rotational axis of the clutch. The rotor may be rotationally fixed, or fixed, to the second shaft. This means that there is no gear shifting mechanism or clutch mechanism between the rotor and the second shaft. The rotor may be connected directly to the second shaft. It is understood that any interconnecting shaft elements form part either of the rotor or the second shaft.

It is specified above that the second shaft may be hollow and the first shaft may extend through the second shaft. The second prime mover may further be positioned between first prime mover and the clutch, for example at the first prime mover. This means that the first shaft extends also through the electric motor, or the rotor of the electric motor. With this positioning of the second prime mover, a more compact support of the second prime can be used that can handle higher loads. This is particularly advantageous in the limited space of an outboard motor for a watercraft.

It is specified above that the first shaft and the second shaft may be positioned in series along the first rotational axis. Alternatively, to the second prime mover being positioned between first prime mover and the clutch, the clutch may be positioned between the first prime mover and the second prime mover. This allows for a smaller outer diameter of the second shaft, which in turn allows for a smaller outer diameter of the first roller and a greater gear ratio of the belt drive or chain drive.

It is specified above that in the third aspect of proposed technology, the belt drive or chain drive comprises a clutch and shaft assembly, a belt or roller chain, and a second roller. It is specified in the second aspect of the proposed technology that the clutch and shaft assembly comprises a clutch and a first shaft and that it may also comprise a second shaft. The belt drive or chain drive may further comprise a housing, or casing, that encloses, or accommodates, the clutch, belt or roller chain, and the second roller. The housing may be arranged to contain, or hold, a fluid, for example the abovementioned coolant-lubricant fluid released from the first roller, or clutch basket. The housing may have a first aperture, and the first shaft and/or the second shaft may extend through the first aperture. The belt drive or chain drive may further comprise a first seal at the first aperture arranged to prevent a fluid from escaping the housing between the housing and the first shaft and/or the second shaft. For example, the seal may be a rotary seal that connects the housing and the first shaft and/or the second shaft.

The housing may have a second aperture, and the second roller or the third shaft may extend through the aperture. The belt drive or chain drive may further comprise a second seal at the second aperture arranged to prevent a fluid from escaping the housing between the housing and the second roller or the third shaft. For example, the seal may be a rotary seal that connects housing and the second roller or the third shaft.

It is specified above that the belt drive or chain drive may comprise an additional belt or roller chain. The housing may also enclose, or accommodates, the additional belt or roller chain. The housing may form a partition between, or at least partly between, the belt or roller chain and the additional belt or roller chain. The partition may be arranged to prevent the belt or roller chain from reaching the additional belt or roller chain at a tearing, or breaking, of the belt or roller chain, and vice versa.

It is described above that any of the first actuator, second actuator, and third actuator may be a hydraulic actuator. The powertrain may comprise: a hydraulic pump arranged to pressurize a hydraulic fluid. The pump may be arranged to be powered by the first shaft or the second shaft. The pump may be a rotary pump. For example, the pump may be a gear pump having a drive gear and an idler gear, and the drive gear may be driven by, or fixed to, the first shaft or the second shaft, or the pump may be a vane pump having a rotor driven by, or fixed to, the second shaft. It is understood that the first shaft and/or the second shaft may extend through the pump.

If no second shaft is present, the pump may be arranged to be powered by the first shaft. It is specified above that the first prime mover may be an internal combustion engine and the second prime mover may be an electric motor. It is further specified that the second prime mover may be connected to the second shaft. If the second shaft is present, the pump may be arranged to be powered by the second shaft. This allows for a supply of pressurized hydraulic fluid without the first prime mover operating.

The powertrain may comprise a first valve operationally coupled to the pump and the first actuator and arranged to control the supply of hydraulic fluid to the first actuator. For example, the supply may be via the abovementioned second conduit and second supply conduit. The powertrain may further comprise a second valve operationally coupled to the pump and the second actuator and arranged to control the supply of hydraulic fluid to the second actuator. For example, the supply may be via the abovementioned fourth conduit and fourth supply conduit. The powertrain may further comprise a third valve operationally coupled to the pump and the third actuator and arranged to control the supply of hydraulic fluid to the third actuator. This way, the valves can control the state of the clutch mechanisms of the clutch.

The powertrain according to the fourth aspect of proposed technology comprises a belt drive or chain drive and a first prime mover, and the first shaft is connected to the first prime mover and the third shaft may be a propeller shaft. In an alternative powertrain, the positioning of the components is reversed, and the third shaft is connected to the first prime mover and the first shafts is a propeller shaft. If the powertrain is used in an outboard motor, this means that the clutch is positioned in the lower section of the outboard motor below the waterline of the watercraft.

It is specified above that the outboard motor of the fifth aspect of proposed technology comprises the powertrain according to the fourth aspect of the proposed technology. The outboard motor may have a: an upper section, or head, a midsection, and a lower section, or lower unit, wherein the upper section is connected to the midsection and the midsection is connected to the lower section.

The first prime mover may be located in the upper section. If present, the second prime mover may also be located in the upper section. The first prime mover may be attached to, or supported by, the midsection. This means that the first prime mover is located above, or at an upper end of, the midsection. It is understood that in operation, the midsection is located below the upper section, and the lower section is located below the midsection.

The outboard motor may further have a head cowl, or motor cover, which is connected to the midsection and covers, or encloses, the first prime mover. For example, the cover may be releasably or pivotally connected to the midsection. The midsection may have a bracket, or mounting bracket, arranged to mount the outboard motor on a watercraft, for example on the hull, or transom, of the boat. The lower section is intended to be below the waterline of the watercraft.

The belt or roller chain may extend from the upper section to the lower section via the midsection. If present, the housing that encloses the clutch, belt or roller chain, and the second roller may extend from the upper section to the lower section via the midsection.

The outboard motor may further comprise: a propeller arranged to be driven by the powertrain. It is understood that the propeller is located at the lower section of the outboard motor. It is specified above that the third shaft may be a propeller shaft, and the propeller may be attached to the third shaft. The propeller may be centered on the abovementioned second rotational axis. The first shaft, the second shaft, the first roller, and the clutch may be located in the upper section, and the second roller and the third shaft may be located in the lower section.

An alternative configuration of a powertrain is described above in which the third shaft is connected to the first prime mover and the first shafts is a propeller shaft. The propeller is then attached to the first shaft. In this configuration, the second roller and the third shaft may be located in the upper section, and the first shaft and the clutch may be located in the lower section.

The outboard motor may be a pushing-type outboard motor. Worded differently, the propeller may be astern relative to the lower section or arranged to face aft. Alternatively, the outboard motor may be a tractor-type outboard motor. Worded differently, the propeller may be fore relative to the lower section or arranged to face forward. This contributes to compensate for any increased aft extension resulting from the proposed powertrain. The relative positions specified here and the aft extension are understood to be in a mounting of the outboard motor at the stern of a boat.

Alternatively to the propeller, the outboard motor may further comprise: a hydrojet, or pump-jet, arranged to be driven by the powertrain. The hydrojet comprises an impeller. The hydrojet may be located at, or form part of, the lower section of the outboard motor. It is understood that the hydrojet is fixed to the lower section. It is specified above that the third shaft may be an impeller shaft, and the impeller may be attached to the third shaft. The impeller may be centered on the abovementioned second rotational axis. The impeller may comprise a plurality of vanes arranged to generate a flow of water along the third axis of rotation. The impeller may further comprise an impeller hub, and the vanes may join at, or be fixed to, the impeller hub. The impeller hub may be fixed to the third shaft.

Any of the first shaft, the second shaft, the first roller, and the clutch may be located in the upper section, and any of the second roller and the third shaft may be located at the lower section. More specifically, the third shaft and the second roller may be located within the waterjet.

It is specified above that the second roller may form an annular impeller housing. It is understood that in this configuration, the powertrain may be without a third shaft. It is further specified that the second roller may further form a plurality of vanes that are fixed to the impeller housing and the vanes may be arranged to generate a flow of water along the third axis of rotation, and that the second roller may further form an impeller hub with the vanes fixed to the impeller hub.

The hydrojet may comprise hydrojet housing that forms an impeller tunnel, or pump channel, wherein the impeller is, or the vanes of the impeller are, located in, or within, the impeller tunnel. If the second roller forms an impeller housing, the impeller housing may form an impeller section of the impeller tunnel. The hydrojet may have an intake, or inlet, arranged to allow water to enter the impeller tunnel. The intake may face forward relative to the impeller or the outboard motor. The outboard motor may then be arranged to position the intake at a level below, or partly below, the bottom of a boat. Alternatively, the intake may face downward relative to the impeller or the outboard motor. The outboard motor may then be arranged to position the intake at the level of the bottom of a boat.

The hydrojet may comprise a nacelle located in, or within, the impeller tunnel and fixed to the hydrojet housing. The impeller may be rotationally supported by the nacelle. The nacelle may be located fore or aft relative to the impeller, or upstream or downstream in the impeller tunnel relative to the impeller. The second roller may be located within the nacelle and the third shaft may extend from the nacelle to the impeller. The third shaft may be rotationally supported by the nacelle, for example by a bearing. It is specified above that the impeller may be attached to the third shaft.

Additionally or alternatively, the hydrojet may comprise a stator located in, or within, the impeller tunnel and fixed to the hydrojet housing. The stator may be located aft relative to the impeller, or downstream in the impeller tunnel relative to the impeller. The impeller may be rotationally supported by the stator. For example, the stator may comprise the abovementioned nacelle and a plurality of stator blades. The stator blades may connect the nacelle to, or fix the nacelle to, the hydrojet housing. It is understood that the stator blades may extend radially outward, for example relative to the second rotational axis or the third shaft.

Additionally or alternatively to the third shaft being rotationally supported by the nacelle, the impeller, or the impeller housing, may be rotationally supported by the hydrojet housing. For example, the hydrojet may comprise an impeller bearing that interconnects the impeller housing and the hydrojet housing. The impeller bearing may be arranged to carry an axial load relative to the second rotational axis. The impeller bearing may also be arranged to carry a radial load relative to the second rotational axis. The hydrojet may further comprise an impeller seal arranged to prevent water from passing between the impeller housing and the hydrojet housing, for example to reach the impeller bearing.

The hydrojet may have a nozzle, or outlet, arranged to allow water to exit the impeller tunnel. The nozzle may be a fixed nozzle, or a static nozzle. This means that that the orientation of the nozzle relative to the impeller tunnel is fixed. Alternatively, the nozzle may be a steering nozzle. This means that the orientation of the nozzle relative to the impeller tunnel is adjustable, for example by a nozzle actuator. This allows for a steering without turning the outboard motor.

The outboard motor, or the abovementioned bracket, may be arranged to allow the outboard motor to tilt around a horizontal axis, for example to lift the lower section of the outboard motor from the water, or partly from the water. The outboard motor, or the abovementioned bracket, may be arranged to allow the outboard motor to turn sideways, or starboard and port, relative to the watercraft. Worded differently, it may be arranged to allow the outboard motor to pivot around a steering axis relative to the watercraft. It is understood that the steering axis is perpendicular to the horizontal axis. This configuration is advantageous in combination with a fixed nozzle, as the pivoting allows for the watercraft to be steered. It is also advantageous in combination with a steering nozzle, which allows for sharp turns at low speeds. The abovementioned second prime mover may be arranged to operate the impeller in reverse, for example with the first clutch mechanism disengaged and the second clutch mechanism engaged, and the pivoting around the steering axis then allows for a reverse steering.

Alternatively, the outboard motor, or the abovementioned bracket, may be arranged to prevent the outboard motor to turn sideways, or starboard and port, relative to the watercraft. Worded differently, it may be arranged to prevent the outboard motor from pivoting around a steering axis. This configuration is advantageous in combination with a steering nozzle. In both configurations, the outboard motor, or the abovementioned bracket, may be arranged to allow the outboard motor to pivot forward or aft relative to the watercraft, or to allow the outboard motor to pivot around a horizontal axis.

The complete hydrojet housing may be arranged to be spaced apart from the watercraft. Worded differently, the complete hydrojet, or the complete hydrojet housing of the hydrojet, may be supported by the lower section of an outboard motor. This configuration is advantageous in combination with the outboard motor being allowed to pivot around a steering axis. Alternatively, the hydrojet housing may have a first part arranged to be attached to, or fixed to, the watercraft, for example to the hull of a boat, and a second part fixed to the outboard motor, or to the lower section of the outboard motor. The first part forms a first section of the impeller tunnel, and the second part forms a second section of the impeller tunnel. It is specified above that the impeller housing may form an impeller section of the impeller tunnel, and the impeller housing may form an impeller section of the second section of the impeller tunnel. The first part and the second part may be separable. This is advantageous in combination with the outboard motor being arranged to pivot around a horizontal axis, as specified above. The intake of the hydrojet may be located on the first part and the nozzle may be located on the second part. This configuration is advantageous in combination with the outboard motor being prevented from pivoting around a steering axis.

In the sixth aspect of proposed technology, a hydrojet, or pump-jet, for a watercraft is arranged to be driven by a belt or roller chain. For example, it may be arranged to be driven by the belt or roller chain of the abovementioned powertrain. The hydrojet may comprise: a hydrojet housing that forms an impeller tunnel, or pump channel, and an impeller, wherein the impeller is located in, or within, the impeller tunnel and arranged to be operationally connected to the belt or roller chain.

The impeller may be centered on a rotational axis, such as the abovementioned second rotational axis. The impeller may comprise a plurality of vanes arranged to generate a flow of water along the axis of rotation. It is understood that the flow is within the impeller tunnel. The impeller may further comprise an impeller hub, and the vanes may join at, or be fixed to, the impeller hub.

The hydrojet may comprise an impeller shaft, such as the abovementioned third shaft. The impeller, or the impeller hub, may be attached to the impeller shaft.

The hydrojet may comprise a nacelle located in, or within, the impeller tunnel and fixed to the hydrojet housing. The impeller may be rotationally supported by the nacelle. The nacelle may be located fore or aft relative to the impeller, or upstream or downstream in the impeller tunnel relative to the impeller. The impeller shaft may be rotationally supported by the nacelle, for example by a bearing. The impeller shaft may extend from the nacelle to the impeller.

The hydrojet may further comprise an impeller roller, or impeller pulley, such as the abovementioned second roller, wherein the impeller roller is fixed to, or rotationally and axially fixed to, the impeller shaft. The impeller roller may have an interface arranged to cooperate with, or connect to, a belt or a roller chain. The interface may share the abovementioned features of the first interface. For example, the interface may form an annular grove centered on the rotational axis and arranged to mate with a V belt, the interface may form an annular ridge centered on the rotational axis and arranged to mate with a longitudinal groove of a groove belt, or it may form a sprocket centered on the rotational axis and arranged to mate with a roller chain. The impeller roller may be located within the abovementioned nacelle. The impeller roller may be located within the abovementioned nacelle.

The hydrojet may comprise a stator located in, or within, the impeller tunnel and fixed to the hydrojet housing. The stator may be located aft relative to the impeller, or downstream in the impeller tunnel relative to the impeller. The impeller may be rotationally supported by the stator. For example, the stator may comprise the abovementioned nacelle and a plurality of stator blades. The stator blades may connect the nacelle to, or fix the nacelle to, the hydrojet housing. It is understood that the stator blades may extend radially outward, for example relative to the rotational axis or the impeller shaft.

Alternatively to the hydrojet having an impeller roller fixed to the impeller shaft, the impeller may comprise an annular impeller housing, or annular impeller shroud, and the abovementioned vanes are fixed to the annular impeller housing. The impeller housing may form an impeller section of the impeller tunnel. The vanes may be located in, or within, the impeller housing. The vanes may extend forward and/or aft, or upstream and/or downstream, relative to the impeller housing. The vanes may be arranged to generate a flow of water along the third axis of rotation. The impeller housing may form, or constitute an impeller roller, or impeller pulley, and the impeller roller may have an interface arranged to cooperate with, or connect to, a belt or a roller chain. The interface may be arranged as the second interface described above. It is understood that in this configuration, the hydrojet may be without the impeller shaft and the nacelle.

The hydrojet may have an intake, or inlet, arranged to allow water to enter the impeller tunnel. The intake may face forward relative to the impeller or the outboard motor. Alternatively, the intake may face downward relative to the impeller or the outboard motor.

The hydrojet may have a nozzle, or outlet, arranged to allow water to exit the impeller tunnel. The nozzle may be a fixed nozzle, or static nozzle. This means that that the orientation of the nozzle relative to the impeller tunnel is fixed. Alternatively, the nozzle may be a steering nozzle. This means that the orientation of the nozzle relative to the impeller tunnel, or to the second axis of rotation, is adjustable, for example by a nozzle actuator. This allows for a steering without turning the outboard motor.

The complete hydrojet housing may be arranged to be spaced apart from the watercraft. Alternatively, the hydrojet housing may have a first part arranged to be attached to, or fixed to, the watercraft, for example to the hull of a boat, and a second part arranged to be fixed to an outboard motor for the watercraft. The first part forms a first section of the impeller tunnel, and the second part forms a second section of the impeller tunnel. It is specified above that the impeller housing may form an impeller section of the impeller tunnel, and the impeller housing may form an impeller section of the second section of the impeller tunnel. The first part and the second part may be separable.

In the eighth aspect of the proposed technology, the belt drive or chain drive may have, or form, a first shaft that is rotationally fixed to the first roller or the first clutch hub of the clutch. The housing may have a first aperture arranged to allow passage of the first shaft from inside the housing to outside the housing. Similarly, the belt drive or chain drive may have, or form, a second shaft that is rotationally fixed to the second roller. For example, the second shaft may correspond to the abovementioned third shaft. The housing may have a second aperture arranged to allow passage of the second shaft from inside the housing to outside the housing.

The housing may comprise a first seal at the first aperture arranged to prevent a fluid from escaping the housing between the housing and the first shaft. Similarly, the housing may comprise a second seal at the second aperture arranged to prevent a fluid from escaping the housing between the housing and the second shaft. For example, the first and second seals may be rotary seals that respectively connect the first shaft and second shaft to the housing.

The belt drive or chain drive may have an additional a belt or roller chain that interconnects the first roller of the clutch and the second roller. The belt or roller chain and the additional belt or roller chain may be of the same type. The belt or roller chain and the additional belt or roller chain may be parallel. The belt or roller chain and the additional belt or roller chain may be spaced apart, for example along the first shaft and the second shaft.

The housing may form a partition arranged to be positioned between, or at least partly between, the belt or roller chain and the additional belt or roller chain. The partition may be arranged to prevent the belt or roller chain from reaching the additional belt or roller chain at a tearing, or breaking, of the belt or roller chain, and vice versa.

In the ninth aspect of the proposed technology, the impeller has an annular impeller housing that forms an interface arranged to cooperate with a belt or roller chain. The impeller may have a rotational axis, such as the abovementioned second rotational axis. It is understood that the impeller is intended to rotate around the rotational axis in operation. The impeller or the impeller housing may be centered on the rotational axis. The interface may be located on the impeller housing, or more precisely on the outside of the impeller housing.

The impeller may further form, or comprise, a plurality of vanes that are fixed to the impeller housing. The vanes may be located within, or radially inside, the impeller housing. The impeller or the vanes may be arranged to generate a flow of water along the rotational axis. The second roller may further form, or comprise, an impeller hub, and the vanes may join at, or be fixed to, the impeller hub. The impeller hub may be centered on the second rotational axis. The impeller housing may form an impeller section of an impeller tunnel, such as an impeller tunnel of a hydrojet. It is understood that the vanes and/or the impeller hub may be located within, or at least in part located within, the impeller section of the impeller tunnel. The vanes and/or impeller hub may extend axially from the impeller housing relative to the second rotational axis.

The impeller hub may be arranged to restrict a flow, for example of water, through the impeller housing, or to reduce the cross-sectional area of the impeller section of the impeller tunnel. It is understood that the cross-sectional area is transverse to the rotational axis.

The interface may comprise any of the features of the first interface and the second interface described above. For example, the interface may form an annular groove centered in the rotational axis arranged to mate with, or cooperate with, a V belt, or the interface may form a sprocket centered on the rotational axis arranged to mate with, or cooperate with, a roller chain.

A first shaft, a second shaft, and a third shaft are specified above. It is understood that the first shaft may be the only shaft present, for example in the clutch and shaft arrangement and in the belt or chain drive. It is further understood that the second shaft may be present without the third shaft being present, and vice versa. It is further understood that the first shaft, second shaft, and third shaft may all be present at the same time. It is further understood that a shaft may be composed of several shaft parts that are connected and rotationally fixed, or fixed, relative to one another and centered on the same rotational axis.

### BRIEF DESCRIPTION OF THE DRAWINGS

A more complete understanding of the abovementioned and other features and advantages of the proposed technology will be apparent from the following detailed description of preferred embodiments of the proposed technology in conjunction with the appended drawings, wherein:
**Fig. 1** is a schematic cross section of an embodiment of a clutch and shaft assembly with a clutch having a single first clutch mechanism arranged to couple a first shaft to a first roller, wherein the first clutch mechanism is a multi-plate wet clutch,
**Fig. 2** is a schematic cross section of another embodiment of a clutch and shaft assembly with a clutch having a single first clutch mechanism arranged to couple a first shaft to a first roller, wherein the first clutch mechanism is a multi-plate wet clutch and a second shaft is arranged in series with the first shaft and fixed to the first roller,
**Fig. 3** is a schematic cross section of another embodiment of a clutch and shaft assembly with a clutch having a single first clutch mechanism arranged to couple a first shaft to a first roller, wherein the first clutch mechanism is a multi-plate wet clutch and a hollow second shaft is fixed to the first roller and the first shaft extends through the second shaft.
**Fig. 4** is a schematic cross section of an another embodiment of a clutch and shaft assembly with a clutch having a single first clutch mechanism arranged to couple a first shaft to a first roller, wherein the first clutch mechanism is an axial dog-clutch,
**Fig. 5** is a schematic cross section of another embodiment of a clutch and shaft assembly with a clutch having a first clutch mechanism and a second clutch mechanism respectively arranged to couple a first shaft and a second shaft to a first roller, wherein the first shaft and the second shaft are arranged in series, and the first clutch mechanism and the second clutch mechanism are multi-plate wet clutches,
**Fig. 6** is a schematic cross section of another embodiment of a clutch and shaft assembly generally corresponding to the clutch and shaft assembly of Fig. 5, but with the second shaft being hollow and the first shaft extending through the second shaft,
**Fig. 7** is a schematic cross section of another embodiment of a clutch and shaft assembly generally corresponding to the clutch and shaft assembly of Fig. 6, but with different orientations of some components,
**Fig. 8** is a schematic cross section of another embodiment of a clutch and shaft assembly generally corresponding to the clutch and shaft assembly of Fig. 6, but with a modified first clutch hub, second clutch hub, and first roller,
**Fig. 9** is a schematic cross section of another embodiment of a clutch and shaft assembly generally corresponding to the clutch and shaft assembly of Fig. 8, but with the second clutch mechanism being an axial dog-clutch,
**Fig. 10** is a schematic cross section of another embodiment of a clutch and shaft assembly generally corresponding to the clutch and shaft assembly of Fig. 9, but with a modified second clutch hub and first roller,
**Fig. 11** is a schematic cross section of another embodiment of a clutch and shaft assembly generally corresponding to the clutch and shaft assembly of Fig. 8, but with the first clutch mechanism and the second clutch mechanism being axial dog-clutches,
**Fig. 12** is a schematic cross section of another embodiment of a clutch and shaft assembly generally corresponding to the clutch and shaft assembly of Fig. 6, wherein the clutch further has a third clutch mechanism arranged to couple the first shaft to the second shaft,
**Fig. 13** is a schematic cross section of another embodiment of a clutch and shaft assembly generally corresponding to the clutch and shaft assembly of Fig. 12, but with the third clutch mechanism arranged differently,
**Fig. 14** is a schematic cross section of another embodiment of a clutch and shaft assembly generally corresponding to the clutch and shaft assembly of Fig. 11, wherein the clutch further has a third clutch mechanism arranged to couple the first shaft to the second shaft,
**Fig. 15** is a schematic cross section of another embodiment of a clutch and shaft assembly generally corresponding to the clutch and shaft assembly of Fig. 12, but with the third clutch mechanism arranged differently,
**Fig. 16** is a schematic cross section of another embodiment of a clutch and shaft assembly generally corresponding to the clutch and shaft assembly of Fig. 12, but with the third clutch mechanism arranged differently,
**Fig. 17** is a schematic cross section of an embodiment of an outboard motor having a powertrain with an engine, and a clutch and shaft assembly with a clutch selectively coupling the engine to a propeller, wherein the clutch is connected to the crank shaft of the engine,
**Fig. 18** is a schematic cross section of an another embodiment of an outboard motor having a powertrain with an engine, and a clutch and shaft assembly with a clutch selectively coupling the engine to a propeller, wherein the clutch is connected to the propeller shaft,
**Fig. 19** is a schematic cross section of another embodiment of an outboard motor having a powertrain with an engine, an electric motor, and a clutch and shaft assembly with a clutch selectively coupling the engine and the motor to a propeller,
**Fig. 20** is a schematic cross section of another embodiment of an outboard motor generally corresponding to the outboard motor of Fig. 19, wherein it further has an additional clutch connected to the propeller shaft and a gear train between the engine and the clutch,
**Fig. 21** is a schematic cross section of another embodiment of an outboard motor generally corresponding to the outboard motor of Fig. 19, but with electric motor positioned between the engine and the clutch and the propeller facing forward,
**Fig. 22** is a schematic cross section of an another embodiment of an outboard motor having a powertrain with an engine, an electric motor, and a clutch and shaft assembly with a clutch selectively coupling the engine and the electric motor to the impeller of a hydrojet, wherein the electric motor is positioned between the engine and the clutch,
**Fig. 23** is a schematic cross section of an another embodiment of an outboard motor having a powertrain with an engine, an electric motor, and a clutch and shaft with a clutch selectively coupling the engine and the electric motor to the impeller of a hydrojet, wherein the clutch is positioned between the engine and the electric motor and the belt connects directly to the impeller,
**Fig. 24** is a schematic cross section of an another embodiment of an outboard motor generally corresponding to the outboard motor of Fig. 22 but having a different hydrojet with the belt connecting directly to the impeller, and
**Fig. 25** is a schematic cross section of an another embodiment of an outboard motor generally corresponding to the outboard motor of Fig. 24 but having a different hydrojet.

### DETAILED DESCRIPTION OF THE DRAWINGS

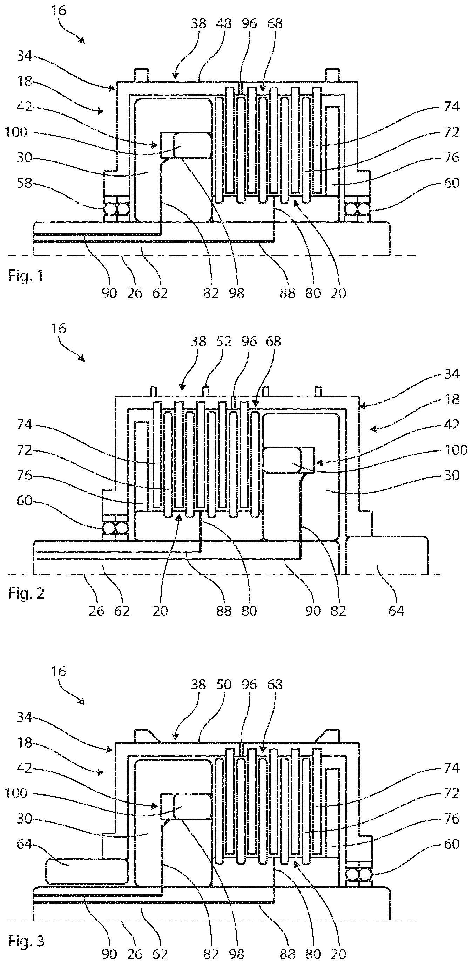

A clutch 18 having a single first clutch mechanism 20 is shown in **Fig. 1****.** The clutch 18 has a first rotational axis 26 and a first clutch hub 30 and a first roller 34 centered on the first rotational axis 26. The clutch 18 forms part of a clutch and shaft assembly 16 in which a first shaft 62 is centered on the rotational axis 26 and rotationally fixed to the first clutch hub 30 by a spline joint (not shown).

The first roller 34 is rotationally supported relative to the first clutch hub 30 and positioned radially outside of the first clutch hub 30 relative to the first rotational axis 26. The first roller 34 forms a first interface 38 that can cooperate with a belt (not shown). The first interface 38 outlines a cylindrical surface 48 centered on the first rotation axis 26 and can thus cooperate with a flat belt.

The clutch 18 further has a first clutch mechanism 20 that operationally connects the first clutch hub 30 and the first roller 34. The first clutch mechanism 20 is positioned between the first rotational axis 26 and the first interface 38 and within the first roller 34. It has a disengaged state in which the first roller 34 can rotate relative to the first clutch hub 30 and an engaged state in which the first roller 34 is rotationally locked to the first clutch hub 30. The clutch 18 further has a linear first actuator 42 that can transition the first clutch mechanism 20 between the disengaged state and the engaged state.

The clutch 18 has a first bearing 58 and a second bearing 60 in the form of rolling-element rotary bearings centered on the first rotational axis 26 and interconnecting the first roller 34 and the first shaft 62. They are arranged to carry primarily a radial load on the first roller 34 from the belt (not shown) relative to the first shaft 62. The first clutch mechanism 20 and the first interface 38 are positioned axially between the first bearing 58 and the second bearing 60 relative to the first rotational axis 26.

The first clutch mechanism 20 essentially corresponds to a multiple-plate wet clutch and has an annular first clutch pack 68 centered on the first rotational axis 26 and with the first roller 34 constituting a clutch basket. The first clutch hub 30 constitutes an inner plate carrier and the first roller 34 constitutes an outer plate carrier. The first clutch pack 68 has a plurality of inner plates 72 connected to the first clutch hub 30 and a plurality of outer plates 74 connected to the first roller 34. The first clutch hub 30 and the inner plates 72 form an inner spline that rotationally locks the inner plates 72 to the first clutch hub 30, and the first roller 34 and the outer plates 74 form an outer spline joint that rotationally locks the outer plates 74 to the first roller 34. The inner spline joint and the outer spline joint are arranged to allow the inner plates 72 respective the outer plates 74 to shift in position along the first rotational axis 26. The inner plates 72 and the outer plates 74 are centered on the first rotational axis 26 and arranged alternatingly in a stack.

The inner plates 72 and the outer plates 74 are spring biased apart by a set of springs (not shown) such that the clutch mechanism 20 is in the disengaged state and the first roller 34 is rotationally unlocked from the first clutch hub 30. The first clutch hub 30 forms a first axial support 76 in the form of an annular wall that is centered on and extends radially outwards relative to the first rotational axis 26. The first axial support 76 prevents the first clutch pack 68 from moving away from the first actuator 42. The first actuator 42 is arranged to compress the first clutch pack 68 along the first rotational axis 26 and bias the first clutch pack 68 against the first axial support 76 when activated. The, the inner plates 72 and the outer plates 74 are then pressed together along the first rotational axis 26, and the first clutch mechanism 20 transition from the disengaged state to the engaged state, at which the first roller 34 is rotationally locked to the first clutch hub 30. This way, the first clutch pack 68 operationally connects the first clutch hub 30 and the first roller 34.

The first shaft 62 has a first supply conduit 88 that can conduct a lubricant-coolant fluid to the clutch 18. The first clutch hub 30 forms a first conduit 80 that can conduct the lubricant-coolant fluid from the first shaft 62 to the first clutch pack 68. The first conduit 80 has an inlet at the first shaft 62 that can receive the lubricant-coolant fluid from the first supply conduit 88. It further has an outlet at the first clutch pack 68 that can release the lubricant-coolant fluid between the inner plates 72 and outer plates 74 of the first clutch pack 68.

The first roller 34 forms an aperture 96 that allows a coolant-lubricant fluid within the first roller 34 to escape radially outwards. The aperture 96 is located at the clutch pack 68 and at the first interface 38 such that the coolant-lubricant fluid released from the first clutch pack 68 lubricates the belt (not shown) cooperating with the first interface 38.

The first actuator 42 is a single hydraulic actuator. The first actuator 42 has an annular recess 98 formed by the first clutch hub 30, centered on the first rotational axis 26, and facing the first clutch pack 68. It further has a ring-shaped piston 100 seated in the recess 98 that can move along the first rotational axis 26 and bias the first clutch pack 68. The first shaft 62 has a second supply conduit 90 that can conduct a hydraulic fluid to the clutch 18. The first clutch hub 30 forms a second conduit 82 with an inlet at the first shaft 62 that can receive the hydraulic fluid from the second supply conduit 90 and an outlet to the annular recess 98. This way, the second conduit 82 can conduct the hydraulic fluid from the first shaft 62 to the annular recess 98, and first actuator 42 can be operated by supplying the hydraulic fluid via of the first shaft 62.

Another embodiment of a clutch 18 and clutch assembly 16 is shown in **Fig. 2****.** The clutch assembly 16 differs from the clutch assembly in Fig. 1 in that it further has a second shaft 64 centered on the rotational axis 26. The first roller 34 of the clutch 18 is mounted on and fixed to the second shaft 64 and the first bearing is absent. The first shaft 62 and the second shaft 64 are positioned in series along the first rotational axis 26. Additionally, the clutch 18 differs by the first interface 38 further forming annular ridges 52 centered on the first rotational axis 26 that can mate with a longitudinal groove of a groove belt (not shown).

Another embodiment of a clutch 18 and clutch assembly 16 is shown in **Fig. 3****.** The clutch assembly 16 differs from the clutch assembly in Fig. 2 in that the second shaft 64 is hollow and the first shaft 62 extends through the second shaft 64. Additionally, the clutch 18 differs by the first interface 38 forming an annular grove 50 centered on the first rotational axis 26 that can cooperate with a V belt (not shown).

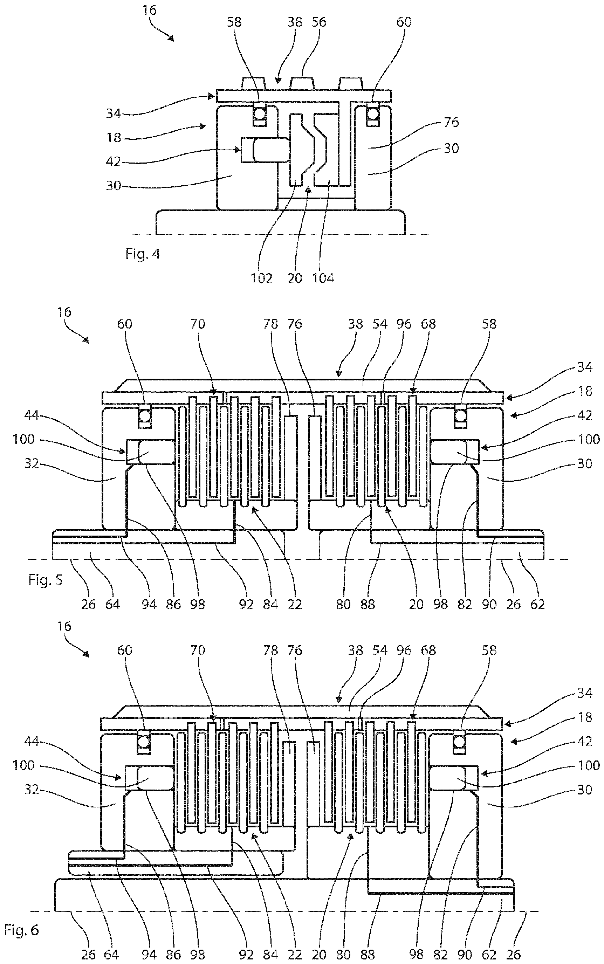

Another embodiment of a clutch 18 and clutch assembly 16 is shown in **Fig. 4****.** The clutch assembly 16 differs from the clutch assembly in Fig. 1 by the first clutch mechanism 20 being a first dog clutch 20 centered on the first rotational axis 26. The first dog clutch 20 has a first member 102 connected to and rotationally fixed to the first clutch hub 30 and a second member 104 connected to and fixed to the first roller 34. The first actuator 42 differs by being an electromechanical actuator. The first actuator 42 is arranged to shift the first member 102 along the first rotational axis 26 to transition the first clutch mechanism 20 from the disengaged state to the engaged state. The first member 102 and the second member 104 are spaced apart, can rotate freely relative to one another, and are rotationally unlocked in the disengaged state. The first member 102 and the second member 104 are pressed together, cannot rotate freely relative to one another, and are rotationally interlocked in the engaged state. The first clutch hub 30 forms a first axial support 76 in the form of an annular wall centered on and extending radially outwards relative to the first rotational axis 26. The first axial support 76 prevents the second member 104 and the first roller 34 to shift in position away from the first actuator 42, and the first actuator 42 biases the second member 104 against the first axial support 76 in the engaged state. The clutch 18 further differs from the clutch assembly in Fig. 1 by the first interface 38 forming a sprocket 56 centered on the first rotational axis 26 that can cooperate with a roller chain, and by the first bearing 58 and the second bearing 60 interconnecting the first roller 34 and the first clutch hub 30.

Another embodiment of a clutch and shaft assembly 16 is shown in **Fig. 5****.** The clutch and shaft assembly 16 has a clutch 18, first shaft 62, and second shaft 64 that are centered on a rotational axis 26. The first shaft 62 and the second shaft 64 are positioned in series along the first rotational axis 26. The clutch 18 has a first roller 34, first clutch hub 30, first clutch mechanism 20, first clutch pack 68, first axial support 76, first supply conduit 88, first conduit 80, first actuator 42, second conduit 82, and second supply conduit 90. These are arranged as and share the features of the corresponding components in the embodiment of Fig. 1.

The clutch 18 further has a second clutch hub 32 centered on the first rotational axis 26 and the second shaft 64 is rotationally fixed to the second clutch hub 32 by a spline joint (not shown). The first roller 34 is also rotationally supported relative to the second clutch hub 32 and is positioned radially outside of the second clutch hub 32 relative to the first rotational axis 26. The clutch 18 further has a second clutch mechanism 22 that operationally connects the second clutch hub 32 and the first roller 34. The second clutch mechanism 22 is positioned between the first rotational axis 26 and the first interface 38 and within the first roller 34. It has a disengaged state in which the first roller 34 can rotate relative to the second clutch hub 32 and an engaged state in which the first roller 34 is rotationally locked to the second clutch hub 32. The clutch 18 further has a linear second actuator 44 that can transition the second clutch mechanism 22 between the disengaged state and the engaged state.

The second clutch mechanism 22 essentially corresponds to a multiple-plate wet clutch and has an annular second clutch pack 70 centered on the first rotational axis 26 and the first roller 34 constitutes clutch basket also for the second clutch mechanism 22. The second clutch hub 32 constitutes an inner plate carrier and the first roller 34 constitutes an outer plate carrier. The second clutch pack 70 shares the features of the first clutch pack 68 and is arranged in relation to the second clutch hub 32 and the first roller 34 as the first clutch pack 68 to the first clutch hub 30 and the first roller 34. The second clutch hub 32 forms a second axial support 78 in the form of an annular wall that is centered on and extends radially outwards relative to the first rotational axis 26. The second axial support 78 prevents the second clutch pack 70 from moving away from the second actuator 44. The second actuator 44 is arranged to compress the second clutch pack 70 along the first rotational axis 26 when activated. The second clutch pack 70 is then biased against the second axial support 78 and the second clutch mechanism 22 transitions from the disengaged state to the engaged state, at which the first roller 34 is rotationally locked to the second clutch hub 32. This way, the second clutch pack 70 operationally connects the second clutch hub 32 and the first roller 34.

The second shaft 64 has a third supply conduit 92 that can conduct a lubricant-coolant fluid to the clutch 18. The second clutch hub 32 forms a third conduit 84 that can conduct a lubricant-coolant fluid from the second shaft 64 to the second clutch pack 70. The third conduit 84 has an inlet at the second shaft 64 that can receive the lubricant-coolant fluid from the third supply conduit 92. It further has an outlet at the second clutch pack 70 that can release the lubricant-coolant fluid to the second clutch pack 70. The aperture 96 formed by the first roller 34 also allows a coolant-lubricant fluid from the second clutch hub 32 to escape radially outwards.

The second actuator 44 is arranged as the first actuator 42 with an annular recess 98 formed by the second clutch hub 32 and a ring-shaped piston 100 seated in the recess 98 that can move along the first rotational axis 26 and bias the second clutch pack 70. The second shaft 64 has a fourth supply conduit 94 that can conduct a hydraulic fluid to the clutch 18. The second clutch hub 32 forms a fourth conduit 86 with an inlet at the second shaft 64 that can receive the hydraulic fluid from the fourth supply conduit 94 and an outlet to the annular recess 98 formed by the second clutch hub 32. This way, the fourth conduit 86 can conduct the hydraulic fluid from the second shaft 64 to the annular recess 98 and the second actuator 44 can be operated by supplying hydraulic fluid via of the second shaft 64.

The first actuator 42 and the second actuator 44 are arranged with the annular recesses 98 facing each other and in opposite directions. The first bearings 58 interconnects the first roller 34 and the first clutch hub and is arranged to carry a radial load relative to the first shaft 62, and the second bearing 60 interconnects the first roller 34 and the second clutch hub 32 and is arranged to carry a load relative to the second shaft 64. The first roller forms 34 a first interface 38 that can cooperate with a synchronous belt (not shown). The first interface 38 forms a plurality of roller teeth 54 that can cooperate with belt teeth on the side of the belt (not shown) facing the first interface 30.

Another embodiment of a clutch and shaft assembly 16 is shown in **Fig. 6****.** It generally has the features of the embodiment described in relation to Fig. 5 and differs by the second shaft 64 being hollow and the first shaft 62 extending through the second shaft 64.

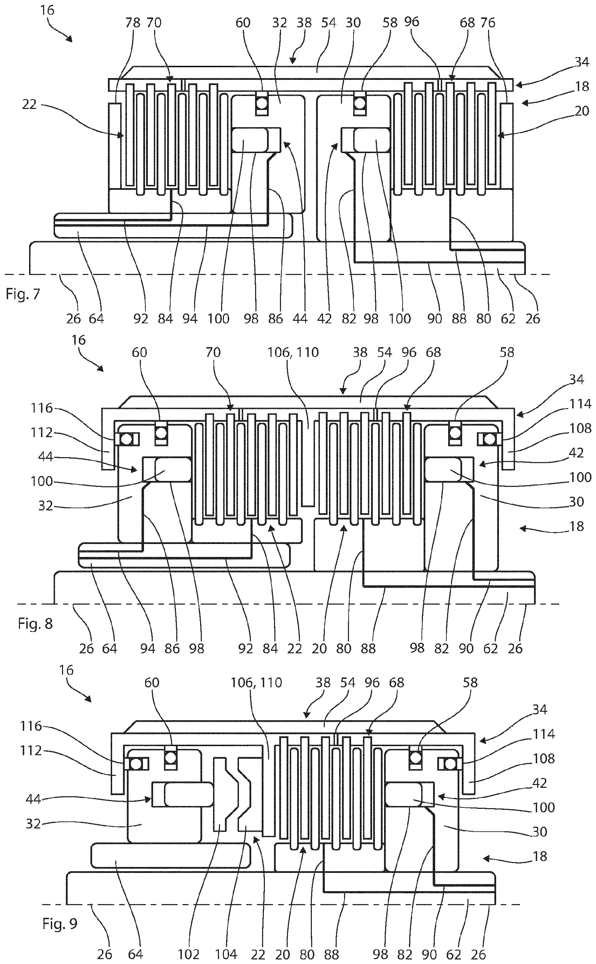

Another embodiment of clutch and shaft assembly 16 is shown in **Fig. 7****.** It generally has the features of the embodiment described in relation to Fig. 6 and differs by the first actuator 42 and the second actuator 44 are arranged with the annular recesses 98 facing away from each other.

Another embodiment of clutch and shaft assembly 16 is shown in **Fig. 8****.** It generally has the features of the embodiment described in relation to Fig. 6 and differs by the first clutch hub 30 having no first axial support 76 and by the second clutch hub 32 having no second axial support 78. Instead, the first roller 34 forms a first radial wall 106, a second radial wall 108, a third radial wall 110, and a fourth radial wall 112 that extend radially inward relative to the first interface 38 and the first rotational axis 26. The first radial wall 106 and the third radial wall 110 have been merged into a single wall.

The first actuator 42 and the first clutch mechanism 20 are positioned axially between the first radial wall 106 and the second radial wall 108. The first actuator 42 biases the first clutch mechanism 20 against the first radial wall 106 when transitioning to and in the engaged state, thus causing an axial load on the first roller 34 in the engaged state of the first clutch mechanism 20. The second radial wall 108 is then biased against the first clutch hub 30. The clutch 18 has a third bearing 114 in the form of a rotary rolling-element bearing centered on the first rotational axis 26 and interconnecting the second radial wall 108 and the first clutch hub 30. This way, the third bearing 114 is arranged to carry the axial load from the first actuator 42.

Similarly, the second actuator 44 and the second clutch mechanism 22 are positioned axially between the third radial wall 110 and the fourth radial wall 112. The second actuator 44 biases the second clutch mechanism 22 against the third radial wall 110 when transitioning to and in the engaged state, thus causing an axial load on the first roller 34 in the engaged state of the second clutch mechanism 22 that is in the opposite direction of the axial load caused by the first actuator 42. The fourth radial wall 112 is then biased against the second clutch hub 32. The clutch 18 has a fourth bearing 116 in the form of a rotary rolling-element bearing centered on the first rotational axis 26 and interconnecting the fourth radial wall 112 and the second clutch hub 32. This way, the third bearing 116 can carry the axial load from the second actuator 44.

Another embodiment of a clutch and shaft assembly 16 is shown in **Fig. 9****.** It generally has the features of the embodiment described in relation to Fig. 8 and differs by the second clutch mechanism 22 being a second dog clutch 22 centered on the first rotational axis 26. Similar to the abovementioned first dog clutch, the second dog clutch 22 has a first member 102 connected to and rotationally fixed to the second clutch hub 32 and a second member 104 connected to fixed to the first roller 34. The second dog clutch 22, the second actuator 42, and the first roller 34 are arranged as the corresponding features in the embodiment of Fig. 4. The first clutch hub 30 does not form a first axial support 76, as in the embodiment of Fig. 4. Instead, the fourth radial wall 112 prevents the first roller 34 to shift in position away from the first actuator 42 in the engaged state of the second clutch mechanism 22. The second actuator 44 differs from the embodiment of Fig. 8 by being an electromechanical actuator.

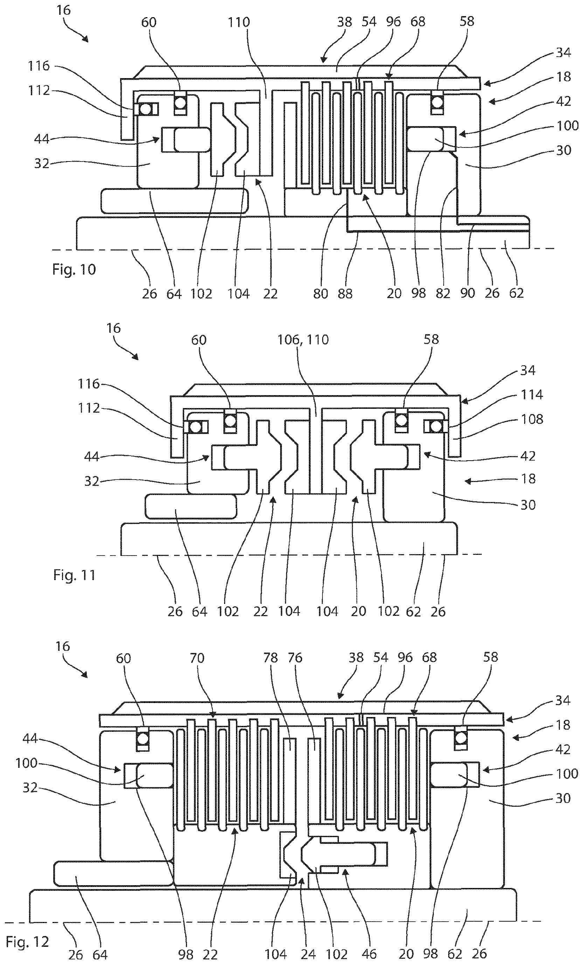

Another embodiment of a clutch and shaft assembly 16 is shown in **Fig. 10****.** It generally has the features of the embodiment described in relation to Fig. 9 and differs by having no first radial wall 106 and by having a first axial support 76 arranged as in the embodiment of Fig. 5 instead of second radial wall 108.

Another embodiment of a clutch and shaft assembly 16 is shown in **Fig. 11****.** It generally has the features of the embodiment described in relation to Fig. 9 and differs by having a first clutch hub 30, a first clutch mechanism 20, and first actuator 42 arranged as in the embodiment of Fig. 4, but with the first actuator 42 biasing the first clutch mechanism 20 against the first radial wall 106 in the engaged state instead of against the first axial support 76 shown in Fig. 4.

Another embodiment of a clutch and shaft assembly 16 is shown in **Fig. 12****.** It generally has the features of the embodiment described in relation to Fig. 6. The clutch 18 further has a third clutch mechanism 24 positioned within the first roller 34 and rotationally fixed to the first clutch hub 30. It further has a hydraulic linear third actuator 46 supported by and rotationally fixed to the first clutch hub 30. The third clutch mechanism 24 is a third dog clutch 24 with a first member 102 rotationally fixed to the first clutch hub 30 and a second member 104 formed by, and thus rotationally and axially fixed to, the second clutch hub 32. The first member 102 is fixed to the moving member of the third actuator 46 and can shift parallel with the first rotational axis 26. This way, the third clutch mechanism 24 operationally connects the first shaft 62 and the second shaft 64 via the first clutch hub 30 and the second clutch hub 32. The third clutch mechanism 24 has a disengaged state in which the first member 102 and the second member 104 are spaced apart and the first shaft 62 can rotate relative to the second shaft 64. It further has and an engaged state in which the first member 102 mates with the second member 104 and the first shaft 62 is rotationally locked to the second shaft 64. The third actuator 46 has a spring (not shown) that biases the third actuator 46 to set the third clutch mechanism 24 in the disengaged state when inactivated. The third actuator 46 is hydraulically operated in the same manner as the first actuator 42 in the embodiment of Fig. 1.

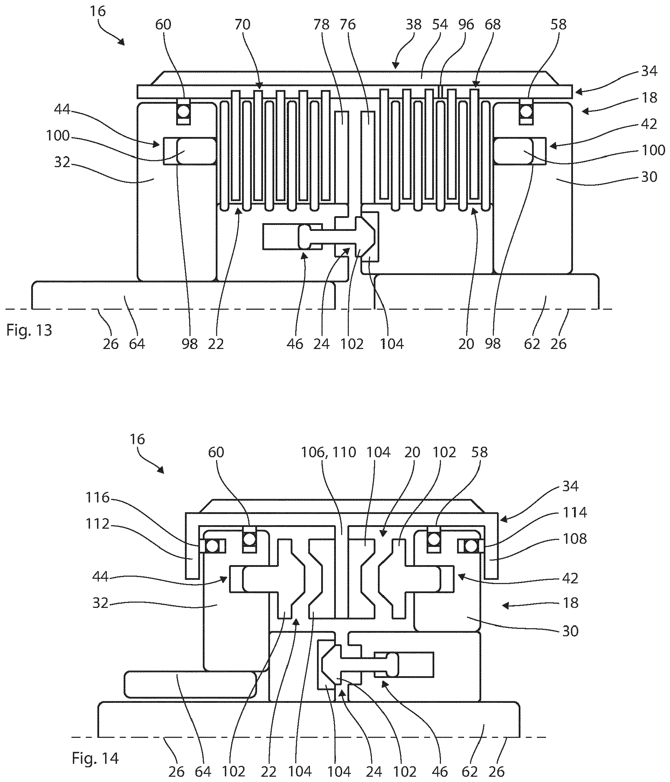

Another embodiment of a clutch and shaft assembly 16 is shown in **Fig. 13****.** It has the general features of the embodiment described in relation to Fig. 5 and additionally has a third actuator 46 that is supported by the second clutch hub 32. The third actuator 46 corresponds to that in the embodiment of Fig. 12 but differs in that the first member 102 of the third clutch mechanism 24 is rotationally fixed to the second clutch hub 32 and the second member 104 is formed by the first clutch hub 30. It further differs by the third actuator 46 having a spring (not shown) that biases the third actuator 46 to set the third clutch mechanism 24 in the engaged state when inactivated.

Another embodiment of a clutch and shaft assembly 16 is shown in **Fig. 14****.** It generally has the features of the embodiment described in relation to Fig. 11 and further has a third actuator 46 and a third clutch mechanism 24 corresponding to those in the embodiment of Fig. 12, with the difference that the third actuator is a linear electromechanical actuator and has a spring (not shown) that biases the third actuator 46 to set the third clutch mechanism 24 in the engaged state when inactivated. This means that the first actuator 42, the second actuator 44, and the third actuator 46 are all linear electromechanical actuators.

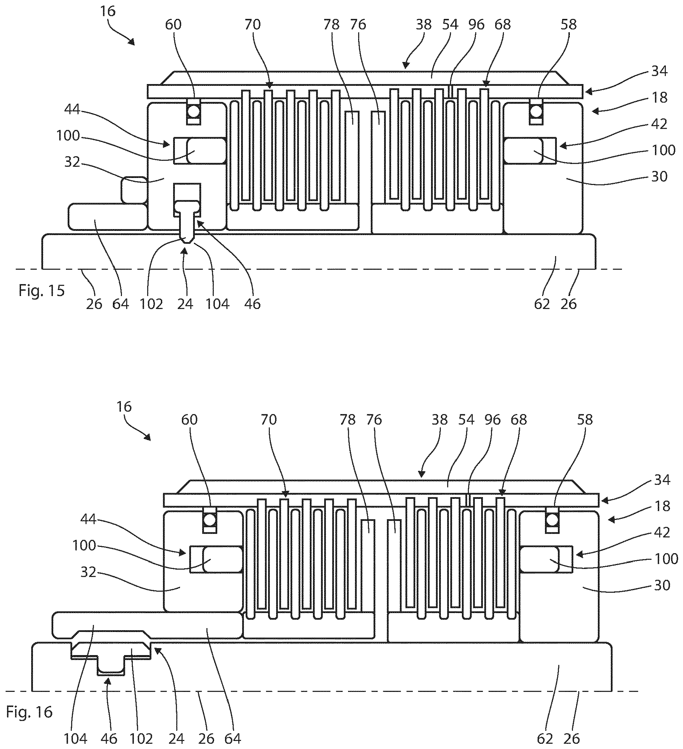

Another embodiment of a clutch and shaft assembly 16 is shown in **Fig. 15****.** It generally has the features of the embodiment described in relation to Fig. 6 and the clutch 18 further has a third clutch mechanism 24 positioned within the first roller 34 and a hydraulic linear third actuator 46 supported by the second clutch hub 32. The third clutch mechanism 24 has a first member 102 rotationally fixed to the first clutch hub 30 and a second member 104 formed by, and thus rotationally and axially fixed to, the first shaft 62. The first member 102 is fixed to the moving member of the third actuator 46 and can move perpendicular to the first rotational axis 26. As in the previous embodiments, the third clutch mechanism 24 has a disengaged state in which the first member 102 and the second member 104 are spaced apart and the first shaft 62 can rotate relative to the second shaft 64 and an engaged state in which the first member 102 mates with the second member 104 and the first shaft 62 is rotationally locked to the second shaft 64. The third actuator 46 has a spring (not shown) that biases the third actuator 46 to set the third clutch mechanism 24 in the engaged state when inactivated.

Another embodiment of clutch and shaft assembly 16 is shown in **Fig. 16****.** It generally has the features of the embodiment described in relation to Fig. 6 and the assembly 16 further has a third clutch mechanism 24 positioned axially outside the first roller 34 and between the first shaft 62 and the second shaft 64. The clutch 18 further has hydraulic radial third actuator 46 supported by the first shaft 62.

The third clutch mechanism 24 has a first member 102 rotationally fixed to the first shaft 62 and a second member 104 formed by, and thus rotationally and axially fixed to, the second shaft 64. The first member 102 is fixed to the moving member of the third actuator 46 and can move perpendicular to the first rotational axis 26. The third clutch mechanism 24 has a disengaged state in which the first member 102 and the second member 104 are spaced apart and the first shaft 62 can rotate relative to the second shaft 64 and an engaged state in which the first member 102 mates with the second member 104 and the first shaft 62 is rotationally locked to the second shaft 64. The third actuator 46 has a spring (not shown) that biases the third actuator 46 to set the third clutch mechanism 24 in the disengaged state when inactivated.

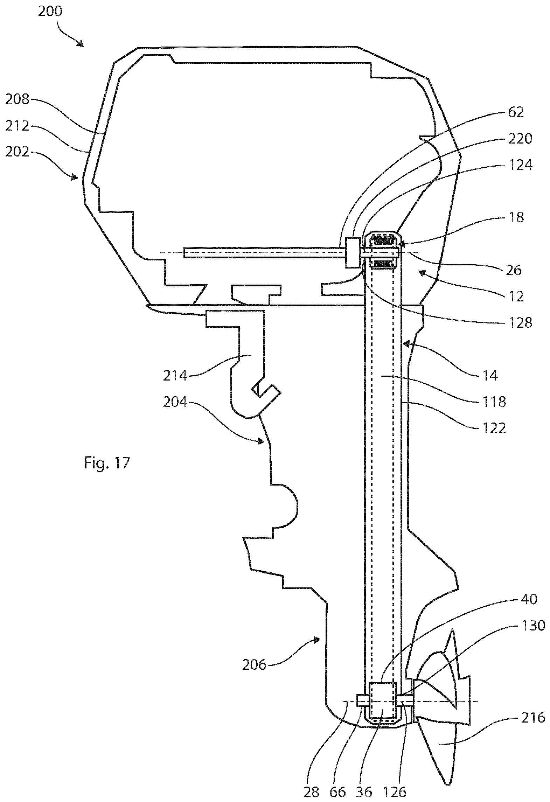

An embodiment of an outboard motor 200 for a boat is shown in **Fig. 17****.** The outboard motor 200 has an upper section 202 and a lower section 206 that are interconnected by a midsection 204. A first prime mover 208 in the form of an internal combustion engine is located in the upper section 202 and attached to and supported by the midsection 204. A head cowl 212 is pivotally connected to the midsection 204 and covers the first prime mover 208. The midsection 204 has a bracket 214 by which the outboard motor 200 can be mounted at the transom of the boat. The bracket 214 allows the outboard motor to be tilted around a horizontal axis and turned around a steering axis. The lower section 206 is located below the waterline of the boat when used.

The first prime mover 208 forms part of a powertrain 12 that further has a belt drive 14. The belt drive 14 has the clutch and shaft assembly 16 described in relation to Fig. 1, a third shaft 66, a second roller 36 fixed to the third shaft 66, and a belt 118 that interconnects the first roller 34 of the clutch 18 and the second roller 36. The third shaft 66 and the second roller 36 are centered on a second rotational axis 28 that is parallel to the first rotational axis 26. The first shaft 62 is fixed to the crank shaft of the first prime mover 208 with the crank shaft is centered on the first rotational axis. The third shaft 66 is a propeller shaft that is fixed to a propeller 216 facing aft and centered on the second rotational axis 28. The second roller 36 has a second interface 40 of the same type as the first interface 38 of the first roller 34. The belt 118 is a flat belt and extends from the upper section 202 to the lower section 206 via the midsection 204. This way, the belt 118 is arranged to cooperate with and transfer a power and torque between the first roller 34 and the second roller 36, and the clutch 18 is arranged to selectively connect and disconnect the first prime mover 208 to the first roller 34 and in extension to the propeller 216.

The belt drive 14 has a housing 122 that extends from the upper section 202 to the lower section 206 via the midsection 204. The housing 122 encloses and accommodates the clutch 18 and its first roller 34, the belt 118, and the second roller 36. The housing 122 is arranged to contain the abovementioned coolant-lubricant fluid released from the first roller 34 via the aperture 96, see Fig. 1. The housing 122 has a first aperture 124 through which the first shaft 62 extends and a first seal 128 positioned at the first aperture 124 in the form of a rotary seal that prevents the coolant-lubricant fluid from escaping between the housing 122 and the first shaft 62. Similarly, the housing 122 has a second aperture 126 through which the third shaft 66 extends and a second seal 130 positioned at the second aperture 126 in the form of a rotary seal that prevents the coolant-lubricant fluid from escaping between the housing 122 and the third shaft 66.

The powertrain 12 has a hydraulic pump 220 that pressurizes a hydraulic fluid. The pump 220 is a rotary gear pump powered by the first shaft 62 with the drive gear (not shown) centered on the first shaft 62 and the first shaft extending through the pump 220. The powertrain 12 further has a first valve (not shown) coupled to the pump 220 and the first actuator 42 of the clutch 18 via the second supply conduit 90 and the second conduit 82, see Fig. 1. This way, the first valve (not shown) can control the supply of hydraulic fluid to the first actuator 42, and in extension control the state of the first clutch mechanism 20 and the function of the clutch 18.

With this configuration of the powertrain 210, the outboard motor 200 can idle without the propeller 216 rotating if the first clutch mechanism 20 of the clutch 18 is disengaged.

In an alternative embodiment, the powertrain 12 in Fig. 17 has a chain drive instead of a belt drive 14 and the clutch and shaft assembly described in relation to Fig. 4. The second interface 40 forms a sprocket (not shown) that is interconnected with the sprocket 56 of the first interface 38 on the first roller 34 by a roller chain (not shown).

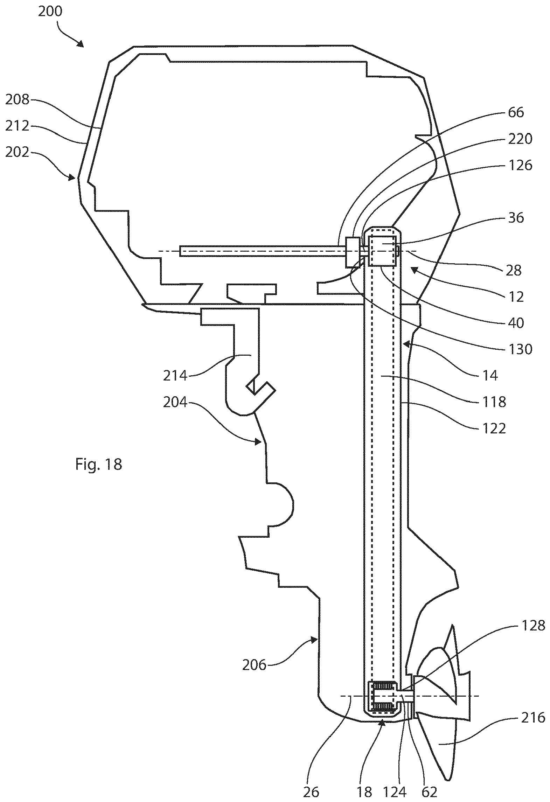

Another embodiment of an outboard motor 200 is shown in **Fig. 18****.** It generally corresponds to the embodiment of Fig. 17 but differs by the positioning of the components being reversed with the second roller 36 positioned in the upper section 202, the third shaft 66 connected to the crank shaft of the first prime mover 208, the clutch 18 positioned in the lower section 206, and the first shaft 62 being the propeller shaft connected to the propeller 216.

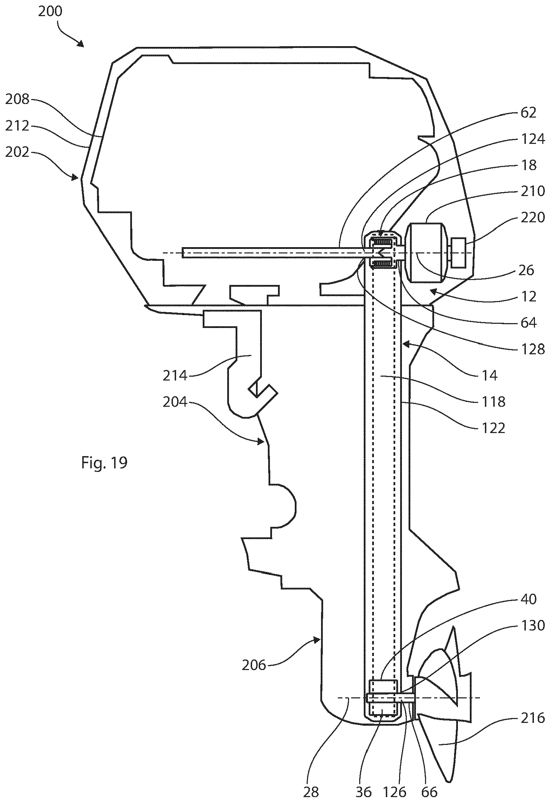

Another embodiment of an outboard motor 200 is shown in **Fig. 19****.** It generally corresponds to the embodiment of Fig. 17 and differs in that the powertrain 12 has the clutch and shaft assembly 16 described in relation to Fig. 2, a second prime mover 210 in the form of an electric motor, and a pump 220. The rotor (not shown) of the second prime mover 210 is centered on the first rotational axis 26 and fixed to the second shaft 64, which means that the clutch 18 is positioned between the first prime mover 208 and the second prime mover 210. The second prime mover 210 is positioned in the upper section 202 of the outboard motor 200 and is enclosed by the head cowl 212. Additionally, the hydraulic pump 220 that pressurizes the hydraulic fluid for the clutch 18 is powered by the second shaft 64 via the rotor (not shown) of the second prime mover 210 instead of by first shaft 62. Here, the rotor (not shown) is understood to form part of the second shaft 64.

With this configuration of the powertrain 210, if the first clutch mechanism 20 is disengaged, see Fig. 2, the outboard motor 200 can be operated in pure electric mode by the second prime mover 210. In this mode, both forward and aft drive is possible. If the first clutch mechanism 20 is engaged, the outboard motor 200 can be operated in parallel-hybrid mode by both the first prime mover 208 and the second prime mover 210. Additionally, the second prime mover 210 can be used as a starter motor for the first prime mover 208 since the pump 220 is powered by the second shaft 64. However, this would cause the propeller 216 to turn.

The second interface 40 of the second roller 36 forms annular ridges (not shown) centered on the second rotational axis 28 corresponding to those 52 of first interface 38 of the first roller, see Fig. 2, and the belt 118 is a cooperating groove belt.

In an alternative embodiment, the powertrain 12 in Fig. 19 has the clutch and shaft assembly described in relation to Fig. 5 and a toothed belt 118 with both the first interface 38 of the first roller 34 and the second interface 40 of the second roller 36 forming cooperating belt teeth 54. With this configuration of the powertrain 210, if the first clutch mechanism 20 is disengaged, the first prime mover 208 can idle without the first roller 34 or propeller 216 turning. If the first clutch mechanism 20 is engaged and the second clutch mechanism 22 is disengaged, the outboard motor 200 can operate in pure combustion mode. If the if the first clutch mechanism 20 is disengaged and the second clutch mechanism 22 is engaged, the outboard motor 200 can operate in pure electric mode. If both the first clutch mechanism 20 and the second clutch mechanism 22 are engaged, the outboard motor 200 can operate in a parallel-hybrid mode.

The powertrain 12 in this alternative embodiment further has a second valve (not shown) coupled to the pump 220 and the second actuator 44 via the fourth supply conduit 94 and the fourth conduit 86, see Fig. 5. This way, the second valve (not shown) can control the state of the second clutch mechanism 22.

In another embodiment, the powertrain 12 has the clutch and shaft assembly described in relation to Fig. 13. The powertrain 12 then has a third valve (not shown) coupled to the pump 220 and the third actuator 46 of the clutch 18 to control the state of the third clutch mechanism 24 and the function of the clutch 18. With the third clutch mechanism 24 disengaged, the outboard motor 220 can be operated as described above. With both the first clutch mechanism 20 and the second clutch mechanism 22 disengaged and the third clutch mechanism engaged, the second prime mover 210 can be used as starter motor for the first prime mover 218 without turning the propeller 216. Additionally, the second prime mover 210 can be operated as a generator powered by the first prime mover 208 for charging batteries without turning the propeller 216.

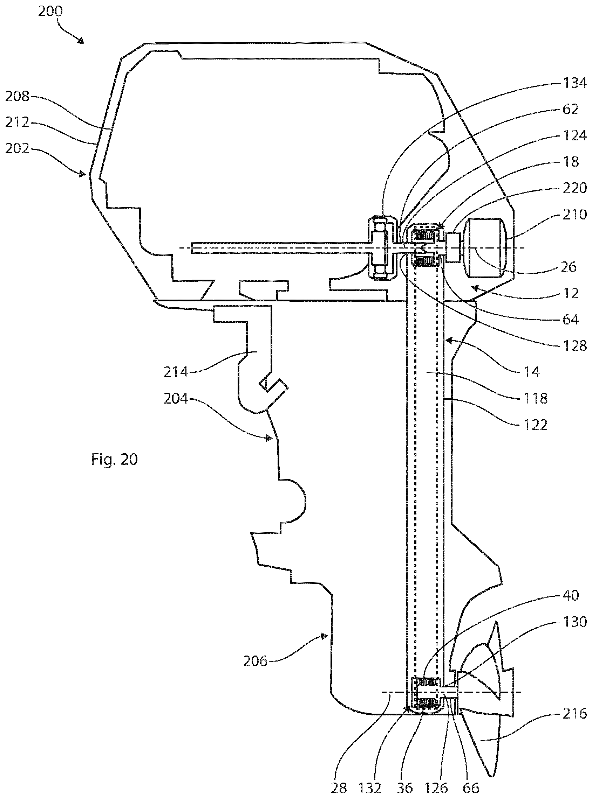

Another embodiment of an outboard motor 200 is shown in **Fig. 20****.** It generally corresponds to the embodiment of Fig. 19 and differs in that the pump 220 is connected to the second shaft 64 between the clutch 18 and the second prime mover 210. The powertrain 12 further differs by having a gear train 134 between the crank shaft and the first shaft 62 in the form of a planetary gear set 134 centered on the first rotational axis 26. The ring gear of the planetary gear set 134 is held stationary and the sun gear constitutes an input element rotationally fixed the crank shaft and the carrier is connected to the planetary gears constitutes an output element rotationally fixed to the first shaft 62. This way, the gear train 134 is arranged to reduce the rotational rate of the first shaft 62 relative to the crank shaft. The belt drive 14 further differs by having an additional clutch 132 corresponding to the clutch 18 in Fig. 1. The third shaft 66 is fixed to the first clutch hub of the additional clutch 132 and the second roller 36 forms part of the additional clutch 132 in the same way as the first roller 34 forms part of the clutch 18. The gear train 134 compensates for the greater outer diameter of the clutch 18.

The powertrain 12 further has an additional valve (not shown) coupled to the pump 220 and the first actuator 42 of the additional clutch 132 via the second supply conduit 90 and the second conduit 82, see Fig. 1. This way, the additional valve (not shown) can control the state of the first clutch mechanism 20 and the function of the additional clutch 132.

With this configuration of the powertrain 210, if the first clutch mechanism 20 of the clutch 18 is disengaged, see Fig. 2, and the first clutch mechanism of the additional clutch 132 is engaged, see Fig. 1, the outboard motor 200 can be operated in pure electric mode by the second prime mover 210. In this mode, both forward and aft drive is possible. If the first clutch mechanism 20 of the clutch 18 is engaged and the first clutch mechanism 20 of the additional clutch 132 is engaged, the outboard motor 200 can be operated in parallel-hybrid mode by both the first prime mover 208 and the second prime mover 210. If the additional clutch 132 is disengaged, the first prime mover 208 can idle without rotating the propeller 216, the second prime mover 210 can be used as a starter motor without rotating the propeller 216, and the second prime mover 210 can be operated as a generator powered by the first prime mover 208 for charging batteries without turning the propeller 216. The fact that the pump 220 is powered via the second shaft 64 allows the first clutch mechanism 20 of the clutch 18 to be engaged and the second prime mover 210 to be used as a starter motor for the first prime mover 208.

In an alternative embodiment, the powertrain 12 in Fig. 20 has the clutch and shaft assembly described in relation to Fig. 5 and a toothed belt 118 with both the first interface 38 of the first roller 34 and the second interface 40 of the second roller 36 forming cooperating belt teeth 54. With this configuration of the powertrain 12, if the first clutch mechanism 20 is disengaged, the first prime mover 208 can idle without the first roller 34 or propeller 216 rotating. If the first clutch mechanism 20 is engaged and the second clutch mechanism 22 is disengaged, the outboard motor 200 can operate in pure combustion mode. If the first clutch mechanism 20 is disengaged and the second clutch mechanism is engaged, the outboard motor 200 can operate in pure electric mode. If both the first clutch mechanism 20 and the second clutch mechanism 22 are engaged, the outboard motor 200 can operate in a parallel-hybrid mode. Additionally, if the both the first clutch mechanism 20 and the second clutch mechanism 22 of the clutch 18 are engaged, see Fig. 5, and the first clutch mechanism 20 of the additional clutch 132 is disengaged, see Fig. 1, the second prime mover 210 can be used as a starter motor for the first prime mover 208 without rotating the propeller 216.

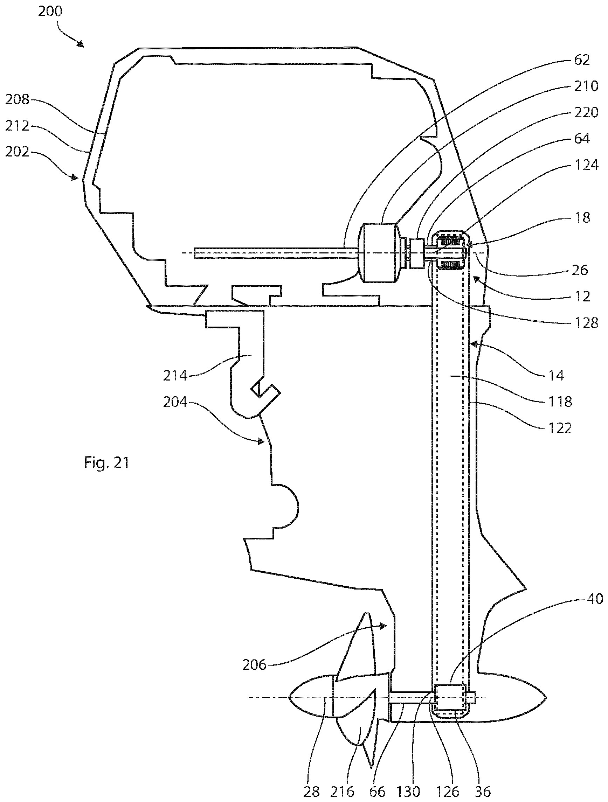

Another embodiment of an outboard motor 200 is shown in **Fig. 21****.** It has the general features of the outboard motor 200 shown in Fig. 17. The belt drive 14 has the clutch and shaft assembly 16 described in relation to Fig. 6, a third shaft 66, a second roller 36 fixed to the third shaft 66, and a belt 118 that interconnects the first roller 34 of the clutch 18 and the second roller 36. The third shaft 66, the second roller 36, and the propeller 216 are arranged as in the embodiment of Fig. 1, but with propeller 216 oriented to face forward, which means that the outboard motor 200 is a tractor-type outboard motor instead of a pushing-type outboard motor. The first shaft 62 is fixed to the crank shaft of the first prime mover 208 with the crank shaft centered on the first rotational axis 26. The second shaft 64 is fixed to the rotor (not shown) of the second prime mover 210. The second shaft 64 is hollow and the first shaft 62 extends through the rotor (not shown) of the second prime mover 210 and the second shaft 64.

The second roller 36 has a second interface 40 of the same type as the first roller 34 and the belt 118 is a toothed belt. The belt drive 14 has a housing 122 as described in relation to Fig. 17. Both the first shaft 62 and the second shaft 64 extend through the first aperture 124 and the first seal 128 prevents the coolant-lubricant fluid from escaping between the housing 122 and the second shaft 64. The hydraulic pump 220 is positioned between the clutch 18 and the second prime mover 210 and is powered via the second shaft 64. In addition to the first valve (not shown) described in relation to Fig. 1, the powertrain 12 further has a second valve (not shown) coupled to the pump 220 and the second actuator 42 of the clutch 18 via the fourth supply conduit 94 and the fourth conduit 86 and, see Fig. 6. This way, the second valve (not shown) can control the supply of hydraulic fluid to the second actuator 42 and control the state of the second clutch mechanism 20.

With this configuration of the powertrain 210, if the first clutch mechanism 20 of the clutch 18 is disengaged and the second clutch mechanism 22 of the clutch 18 is engaged, the outboard motor 200 can be operated in pure electric mode by the second prime mover 210. In this mode, both forward and aft drive is possible. If the first clutch mechanism 20 of the clutch 18 is engaged and the second clutch mechanism 22 of the clutch 18 is disengaged, the outboard motor 200 can be operated in a pure combustion mode. If both the first clutch mechanism and the second clutch mechanism are engaged, the outboard motor 200 can be operated in a parallel-hybrid mode. Additionally, the second prime mover 210 can be used as a starter motor for the first prime mover 208 since the pump 220 is powered by the second shaft 64, however with the propeller 216 rotating.

In alternative embodiment, the powertrain 12 in Fig. 21 has the clutch and shaft assembly 16 described in Fig. 7 or 8 and the outboard motor 200 can be operated as described above. In another alternative embodiment, the powertrain 12 has the clutch and shaft assembly 16 of Fig. 9, 10, or 11 and the outboard motor 200 can be operated as described above. This means that the second clutch mechanism 22 is a dog clutch and that it is coupled to the second prime mover 210. The second prime mover 210 is an electric motor, which allows for a rapid and accurate adjustment of the rotational speed of the first member 102 of the dog clutch to the rotational speed of the second member 104 of the dog clutch, which in extensions allows for a smooth transition from pure combustion mode to parallel-hybrid mode while driving. With the clutch and shaft assembly 16 of Figs. 9 or 10, the powertrain 12 does not have the abovementioned second valve. Instead, it has an electric power source (not shown) and a switch (not shown) operationally connected to the second actuator by which the operation of the second actuator 42 can be controlled. With the clutch and shaft assembly 16 of Fig. 11, the powertrain 12 has an additional switch (not shown) operationally connecting the electric power source (not shown) and the first actuator 40 instead of the abovementioned first valve.

In another alternative embodiment, the powertrain 12 in Fig. 21 has the clutch and shaft assembly 16 described in Fig. 12, 13, 14, 15, or 16 and the outboard motor 200 can be operated as described above with the third clutch mechanism 24 disengaged. With both the first clutch mechanism 20 and the second clutch mechanism 22 disengaged and the third clutch mechanism engaged, the second prime mover 210 can be used as starter motor for the first prime mover 218 without turning the propeller 216. Additionally, the second prime mover 210 can be operated as a generator powered by the first prime mover 208 for charging batteries without turning the propeller 216.

In the embodiments with the clutch and shaft assembly 16 of any of Figs. 12, 13, 15, and 16, the powertrain 12 further has a third valve (not shown) coupled to the pump 220 and the third actuator 46 of the clutch 18 to control the state of the third clutch mechanism 24. In the embodiments with the clutch and shaft assembly of any of Fig. 14, the powertrain 12 has an electric power source (not shown) and a switch (not shown) operationally connected to the third actuator 46 by which the operation of the third actuator 46 can be controlled.

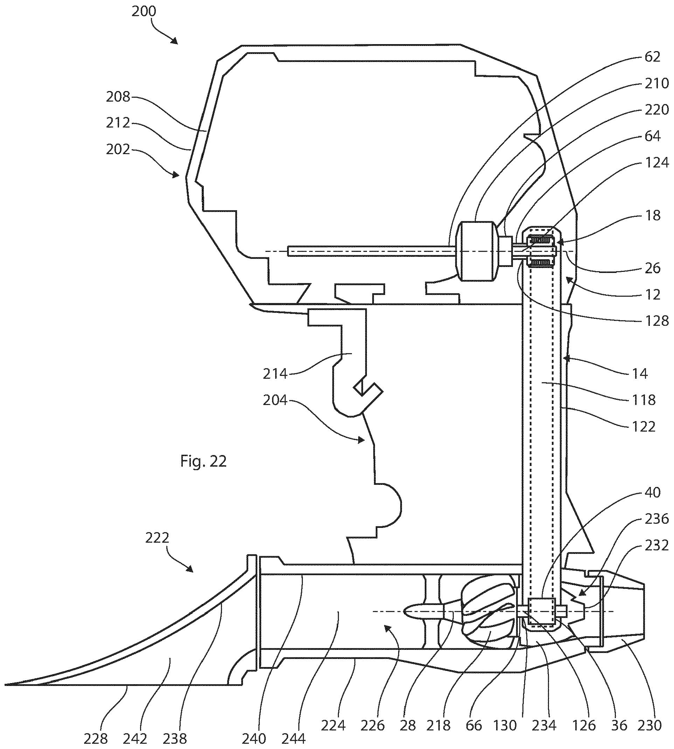

Another embodiment of an outboard motor 200 is shown in **Fig. 22****.** It has the general features of the outboard motor 200 shown in Fig. 21 and differs by having a hydrojet 222 with an impeller 218 instead of a propeller.

The hydrojet 222 has a hydrojet housing 224 that forms an impeller tunnel 226 and the impeller 218 is located within the impeller tunnel 226. The hydrojet housing 224 has a first part 238 that is attached to the hull (not shown) of a boat, and a second part 240 that fixed to the lower section 206 of the outboard motor 200. The first part 238 forms a first section 242 of the impeller tunnel 226, and the second part 240 forms a second section 244 of the impeller tunnel 226. The first part 238 and the second part 240 are separable, which allows for a tilting of the lower section 206 of outboard motor 200 aft and upward relative to the first part 238.

The bracket 214 on the midsection 204 of the outboard motor 200 allows for lower section 206 to tilt around a horizontal axis, as described in relation to Fig. 1. The bracket 214 further prevents the outboard motor 200 to turn sideways.

The hydrojet 222 has an intake 228 located on the first part 238 of the hydrojet housing 224 that faces downward and through which water can enter the impeller tunnel 226. The hydrojet 222 has a nozzle 230 located on the second part 240 of the hydrojet housing 224 that allows water to exit the impeller tunnel 226. The nozzle 230 is a steering nozzle with an orientation that can be adjusted by a nozzle actuator (not shown). The bracket 214 differs from that in Fig. 21 in that it prevents the outboard motor to turn sideways, and the boat is thus steered by the nozzle 230 alone.

The hydrojet 222 has a nacelle 230 located in the impeller tunnel 224 and aft relative to the impeller 218. The nacelle is fixed to the hydrojet housing 224 and rotationally supports the impeller 218. The second roller 36 is located within the nacelle 232 and the third shaft 66 is an impeller shaft that extends from the nacelle 232 and the impeller 218 is attached to the third shaft 66. The hydrojet 222 has stator blades 234 that extend outward relative to the second rotational axis 28 that connects and fixes the nacelle 232 to the hydrojet housing 224. This way, the stator blades 234 and the nacelle 232 jointly forms a stator 236 located downstream in the impeller tunnel 226 relative to the impeller 218.

With this configuration, the hydrojet 222 is arranged to be driven by a belt 118. The outboard motor can be operated as described in relation to Fig. 21. In an alternative embodiment, the powertrain 12 in Fig. 22 has the clutch and shaft assembly 16 described in relation to any of Figs. 12, 14, 15, 16, or 17 and can be operated as described above.

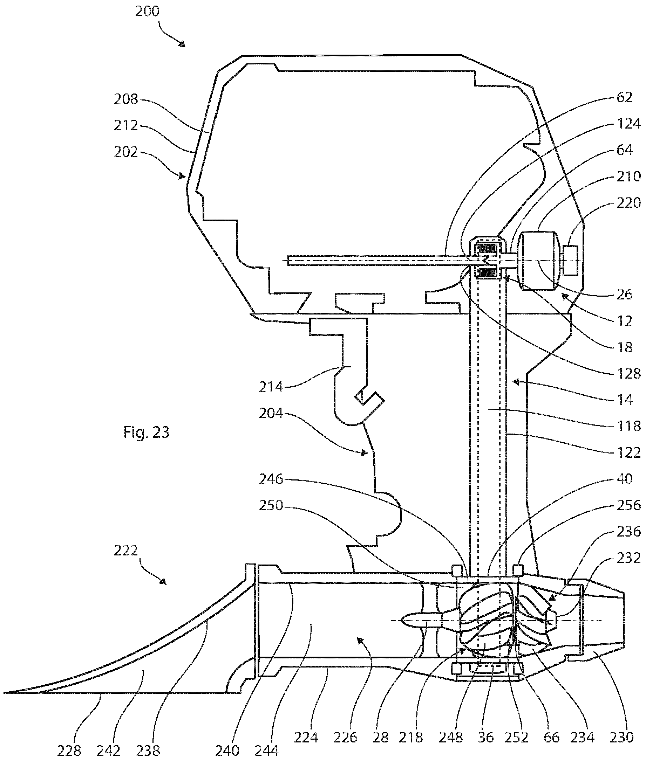

Another embodiment of an outboard motor 200 is shown in **Fig. 23****.** It has the general features of the outboard motor 200 shown in Fig. 19 with the clutch and shaft assembly 16 of Fig. 13. It differs by having a hydrojet 222 with an impeller 218 instead of a propeller. The hydrojet 222 shares the features of the hydrojet 222 in the embodiment of Fig. 22. For example, the impeller 218 is connected to the nacelle 232 by the third shaft 66 centered on the second rotational axis 28, and the third shaft 66 constitutes an impeller shaft that is connected to the nacelle 232 by rotary bearings (not shown). The third shaft 66 is connected to the impeller hub 252 of the impeller and the vanes 248 of the impeller are fixed to the impeller hub 252. This way, the impeller 218 is rotationally supported by the nacelle 232.

The hydrojet 222 differs in that the second roller 36 of the belt drive 14 forms an annular impeller housing 246 and the vanes 248 are inside and fixed to the impeller housing 246. This way, the belt 118 connects directly to the impeller 218. The impeller housing 246 forms an impeller section 250 of the second section 244 of the impeller tunnel 226. The hydrojet also has impeller seals 256 that prevents water from passing between the impeller housing 246 and the hydrojet housing 224. Further, the impeller housing 246 extends through the second aperture (not indicated) of the housing 122 and the second seal (not indicated) positioned at the second aperture (not indicated) prevents the coolant-lubricant fluid from escaping between the housing 122 and the impeller housing 246.

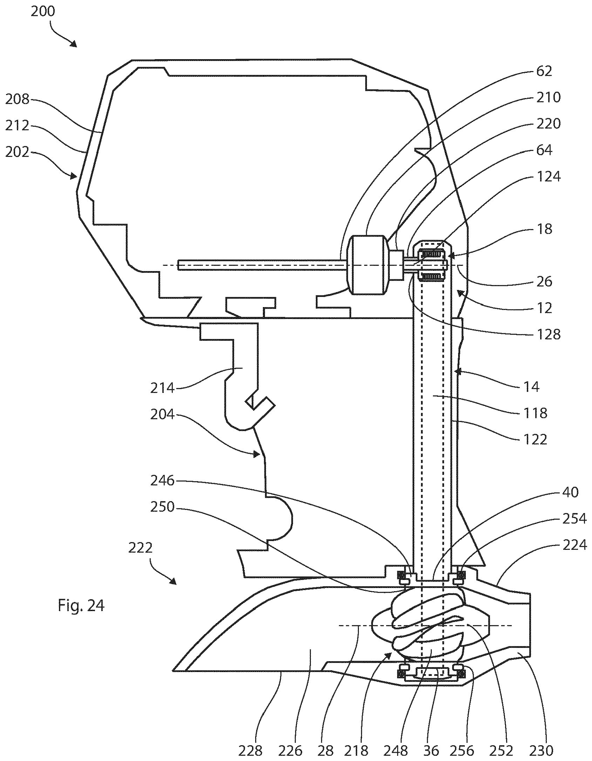

Another embodiment of an outboard motor 200 is shown in **Fig. 24****.** It has the general features of the outboard motor 200 shown in Fig. 22. It differs by the second roller 36 of the belt drive 14 forming an annular impeller housing 246 and the vanes 248 are inside and fixed to the impeller housing 246, which means that the belt 118 is connected directly to the impeller 218. The impeller housing 246 forms an impeller section 250 of the impeller tunnel 226. The hydrojet 222 has no nacelle or stator. Instead, the impeller housing 246 is rotationally supported by the hydrojet housing 224 by impeller bearings 254 that interconnects the impeller housing 246 and the hydrojet housing 224. The hydrojet also has impeller seals 256 that prevents water from passing between the impeller housing 246 and the hydrojet housing 224 and reach the impeller bearings 254.

Further, the impeller housing 246 extends through the second aperture (not indicated) of the housing 122 and the second seal (not indicated) positioned at the second aperture (not indicated) prevents the coolant-lubricant fluid from escaping between the housing 122 and the impeller housing 246.

Additionally, the complete hydrojet housing 224 that forms the impeller tunnel 226 is supported by the lower section 206 of the outboard motor 206 and the nozzle 230 is a fixed nozzle 230.This means that the intake 228 is fixed relative to the nozzle 230. The bracket 214 on the midsection 204 allows the outboard motor 200 to be tilted around a horizontal axis such that the lower section 206 moves up or down, as in the previous embodiments of Fig. 22. Additionally, the bracket 214 allows the outboard motor to be pivoted around a steering axis, as in the embodiments of Figs. 17 to 21. This allows the boat to be steered by turning the outboard motor 200, both when going forward and in reverse. In an alternative embodiment, the nozzle is a T steering nozzle with an orientation that can be adjusted by a nozzle actuator (not shown), as described in relation to Fig. 22.

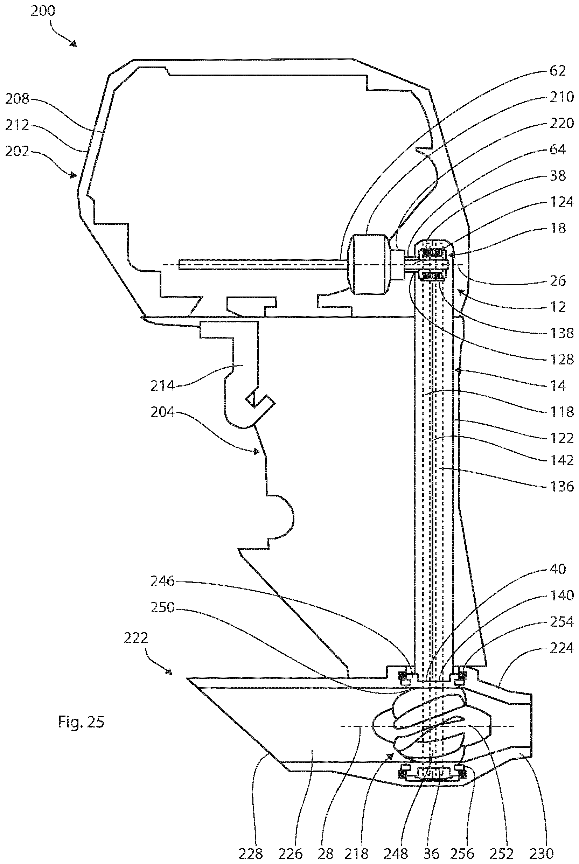

Another embodiment of an outboard motor 200 is shown in **Fig. 25****.** It has the general features of the outboard motor 200 shown in Fig. 24 and differs by the intake 228 facing forward relative to the impeller 218 instead of downward. The hydrojet housing 224 forming the impeller tunnel 226 is also situated at a lower level. If further differs by the belt drive 14 having an additional belt 136 that interconnects the first roller 34 and the second roller 36 and is of the same type as the belt 118. The belt 118 and the additional belt 136 are arranged in parallel planes and cooperate for a parallel torque transfer between the first roller 34 and the second roller 36.

The first roller 34 forms an additional first interface 138 of the same type as the first interface 38 and that cooperates with the additional belt 136. Similarly, the second roller 36 forms an additional second interface 140 of the same type as the second interface 40 and that cooperates with the additional belt 136. The belt 118 and the additional belt 136 are spaced apart along the first rotational axis 26 and the second rotational axis 28. The housing 122 forms a partition 142 between the belt 118 and the additional belt 136 that prevents the belt 118 from reaching the additional belt 136 if it breaks, and vice versa.

### ITEM LIST

- 12: powertrain
- 14: belt drive or chain drive
- 16: clutch and shaft assembly
- 18: clutch
- 20: first clutch mechanism
- 22: second clutch mechanism
- 24: third clutch mechanism
- 26: first rotational axis
- 28: second rotational axis
- 30: first clutch hub
- 32: second clutch hub
- 34: first roller
- 36: second roller
- 38: first interface
- 40: second interface
- 42: first actuator
- 44: second actuator
- 46: third actuator
- 48: cylindrical surface of first interface
- 50: annular groove of first interface
- 52: annular ridge of first interface
- 54: belt teeth of first interface
- 56: sprocket of first interface
- 58: first bearing
- 60: second bearing
- 62: first shaft
- 64: second shaft
- 66: third shaft
- 68: first clutch pack
- 70: second clutch pack
- 72: inner plates
- 74: outer plates
- 76: first axial support
- 78: second axial support
- 80: first conduit
- 82: second conduit
- 84: third conduit
- 86: fourth conduit
- 88: first supply conduit
- 90: second supply conduit
- 92: third supply conduit
- 94: fourth supply conduit
- 96: aperture
- 98: annular recess
- 100: ring-shaped piston
- 102: first member of dog clutch
- 104: second member of dog clutch
- 106: first radial wall
- 108: second radial wall
- 110: third radial wall
- 112: fourth radial wall
- 114: third bearing
- 116: fourth bearing
- 118: belt
- 120: chain
- 122: housing
- 124: first aperture
- 126: second aperture
- 128: first seal
- 130: second seal
- 132: additional clutch
- 134: gear train
- 136: additional belt
- 138: additional first interface
- 140: additional second interface
- 142: partition
- 200: outboard motor
- 202: upper section
- 204: midsection
- 206: lower section
- 208: first prime mover
- 210: second prime mover
- 212: head cowl
- 214: bracket
- 216: propeller
- 218: impeller
- 220: hydraulic pump
- 222: hydrojet
- 224: hydrojet housing
- 226: impeller tunnel
- 228: intake
- 230: nozzle
- 232: nacelle
- 234: stator blades
- 236: stator
- 238: first part of housing
- 240: second part of housing
- 242: first section of impeller tunnel
- 244: second section of impeller tunnel
- 246: impeller housing
- 248: vanes
- 250: impeller section
- 252: impeller hub
- 254: impeller bearing
- 256: impeller seal

## Claims

1. A clutch (18) arranged to selectively connect a first shaft (62) to a belt or roller chain (118), wherein the clutch (18) has a first rotational axis (26) and comprises:
- a first clutch hub (30) centered on the first rotational axis (26),
- a first roller (34) centered on the first rotational axis (26),
- a first clutch mechanism (20), and
- a first actuator (42),
wherein the first clutch hub (30) is arranged to be mounted on the first shaft (62), the first roller (34) is rotationally supported, relative to the first clutch hub (30), and the first roller (34) forms a first interface (38) arranged to cooperate with the belt or a roller chain (118), wherein the first clutch mechanism (20) operationally connects the first clutch hub (30) and the first roller (34), and the first clutch mechanism (20) is positioned between the first rotational axis (26) and the first roller (34), and
wherein the first clutch mechanism (20) has a disengaged state in which the first roller (34) can rotate relative to the first clutch hub (30) and an engaged state in which the first roller (34) cannot rotate relative to the first clutch hub (30), and the first actuator (42) is arranged to set the first clutch mechanism (20) in the disengaged state or the engaged state.

2. The clutch (18) according to claim 1, wherein the first clutch mechanism (20) comprises a first clutch pack (68) and the first roller (34) is a clutch basket, and the first clutch pack (68) operationally connects the first clutch hub (30) and the first roller (34).

3. The clutch (18) according to claim 2, wherein the first clutch hub (30) forms a first conduit (80) arranged to conduct a lubricant-coolant fluid from the first shaft (62) to the first clutch pack (68).

4. The clutch (18) according to claim 3, wherein the first roller (34) forms an aperture (96) arranged to allow a coolant-lubricant fluid within the clutch basket to escape the first roller (34), wherein the aperture (96) is located at the first interface (38).

5. The clutch (18) according to any of the claims 1 to 4, wherein the clutch (18) is further arranged to connect a second shaft (64) to the belt or roller chain (118), wherein the first roller (34) is arranged to be fixed to the second shaft (64).

6. The clutch (18) according to any of the claims 1 to 4, wherein the clutch (18) is further arranged to selectively connect and disconnect a second shaft (64) to a belt or roller chain (118), wherein the clutch (18) further comprises:
- a second clutch hub (32),
- a second clutch mechanism (22), and
- a second actuator (44),
wherein the second clutch hub (32) is arranged to be mounted on the second shaft (64), and the first roller (34) is rotationally supported relative to the second clutch hub (32), wherein the second clutch mechanism (22) operationally connects the second clutch hub (32) and the first roller (34), and the second clutch mechanism (22) is positioned between the first rotational axis (26) and the first roller (34), and
wherein the second clutch mechanism (22) has a disengaged state in which the first roller (34) can rotate relative to the second clutch hub (32) and an engaged state in which the first roller (34) cannot rotate relative to the second clutch hub (32), and the second actuator (44) is arranged to set the second clutch mechanism (22) in the disengaged state or the engaged state.

7. The clutch (18) according to claim 6, wherein the first shaft (62) and the second shaft (64) are positioned in series along the first rotational axis (26), or the second shaft (64) is hollow and the first shaft (62) extends through the second shaft (64).

8. The clutch (18) according to claim 6 or 7, wherein the clutch (18) further comprises:
- a third clutch mechanism (24), and
- a third actuator (46),
wherein the third clutch mechanism (24) operationally connects the first shaft (62) and the second shaft (64), the third clutch mechanism (24) has a disengaged state in which the second shaft (64) can rotate relative to the first shaft (62) and an engaged state in which the second shaft (64) cannot rotate relative to the first shaft (62), and the third actuator (46) is arranged to set the first clutch mechanism (20) in the disengaged state or the engaged state.

9. A belt drive or chain drive (14), wherein the belt drive or chain drive (14) comprises:
a clutch (18) according to any of the claims 1 to 8,
a first shaft (62)
a belt or roller chain (118), and
a second roller (36) having a second rotational axis (28),
wherein the first shaft (62) is rotationally fixed to the first clutch hub (30), and the belt or roller chain (118) interconnects the first roller (34) of the clutch (18) and the second roller (36).

10. The belt drive or chain drive (14) according to claim 9, wherein the clutch (18) is according to any of the claims 5 to 8, and the belt drive or chain drive (14) further comprises:
- a second shaft (64),
wherein the first roller (34) is rotationally fixed to the second shaft (64) or the second clutch hub (32) is rotationally fixed to the second shaft (64).

11. The belt drive or chain drive (14) according to claim 9 or 10, wherein the belt drive or chain drive (14) further comprises:
- a third shaft (66),
wherein the second roller (36) is fixed to the third shaft (66), and the third shaft (66) is a propeller shaft or an impeller shaft.

12. The belt drive or chain drive (14) according to any of the claim 9, wherein the second roller (36) forms a second interface (40) arranged to cooperate with the belt or roller chain (118), the second roller (36) constitutes an impeller (218) centered on the second rotational axis (28), the second roller (36) forms an annular impeller housing (246), and the second interface (40) is located on the impeller housing (246).

13. A powertrain (12), wherein the powertrain (12) comprises the belt drive or chain drive (14) according to any of the claims 9 to 12, and a first prime mover (208), wherein the first shaft (62) is connected to the first prime mover (208).

14. The powertrain (12) according to claim 13, wherein the belt drive or chain drive (14) is according to claim 12, and the powertrain (12) further comprises:
- a second prime mover (210),
wherein the second prime mover (210) is connected to the second shaft (64).

15. An outboard motor (200), wherein the outboard motor comprises the powertrain (12) according to claim 13 or 14.
